# EUROPEAN PATENT APPLICATION

(11) **EP 4 451 442 A1**
(43) Date of publication of application: **23.10.2024**
(21) Application number: 22948373.0
(22) Date of filing: 29.06.2022
(51) Int. Cl.: H01M 50/244, H01M 50/249, B62D 25/20

(54) **BOX, BATTERY AND ELECTRIC DEVICE**

(71) Applicant: Contemporary Amperex Technology (Hong Kong) Limited, Central, Central And Western District (HK)
(72) Inventor: ZHANG, Wenhui, Ningde, Fujian 352100 (CN); LONG, Chao, Ningde, Fujian 352100 (CN); CHEN, Xingdi, Ningde, Fujian 352100 (CN); WANG, Peng, Ningde, Fujian 352100 (CN)
(74) Representative: Jacob, Reuben Ellis
(86) International application number: PCT/CN2022/102306
(87) International publication number: WO 2024/000255

(57) **Abstract**

Provided are a box (10), a battery (100) and an electric device. The box (10) has an accommodating cavity (s) for accommodating a battery cell (20), and a top face (h) facing away from the accommodating cavity (s), wherein the top face (h) of the box is provided with a first region (ha) and a second region (hb), and a sealing region (hc) located therebetween; the sealing region (hc) surrounds the first region (ha), and the sealing region (hc) is configured for mounting a sealing member (12); the second region (hb) is configured with a plurality of mounting portions (13a3), and the battery (100) is mounted to an external device by means of the mounting portions (13a3), with the sealing member (12) coming into contact with the external device; and the shortest distance (L1) between the geometric center of an orthographic projection of each mounting portion (13a3) in the second region (hb) and an outer edge of the sealing region (hc) ranges from 30 mm to 200 mm.

## Description

### TECHNICAL FIELD

This application relates to the field of battery technologies, and in particular, to a box, a battery, and an electric apparatus.

### BACKGROUND

With the increasing maturity of new energy technologies, new energy vehicles are gradually coming into public attention. The main core technology of new energy vehicles lies in the battery, and the safety and stability of the battery directly determines the performance of the vehicle.

A vehicle typically includes a body and a battery loaded on the body. The battery typically includes a box and battery cells installed in the box. Mounting the box on the body easily leads to poor sealing and connection rigidity between the two components.

### SUMMARY

In view of this, this application provides a battery and an electric apparatus, to improve the sealing effect and connection rigidity between a box and a vehicle.

According to a first aspect, this application provides a box. The box has an accommodating cavity for accommodating a battery cell and a top surface facing away from the accommodating cavity; and a first region, a second region, and a sealing region located between the first region and the second region are formed on the top surface of the box, where the sealing region surrounds the first region, the sealing region is used for mounting a sealing member, and the second region is constructed with multiple mounting portions, the battery being mounted on an external apparatus through the mounting portions and the sealing member being in contact with the external apparatus; where a shortest distance between a geometric center of an orthographic projection of the mounting portion in the second region and an outer edge of the sealing region is 30 mm-200 mm.

In this way, the solution of this application can avoid the mounting force points of the mounting portions from being too far away from the sealing member. This not only guarantees the sealing effect of the sealing member on the inside of the body, but also reduces the mounting torque of each mounting portion mounted on the body and effectively shortens the arm of the mounting force to ensure the connection rigidity between the battery and the body.

In some embodiments, the shortest distance between the geometric center of the orthographic projection of the mounting portion in the second region and the outer edge of the sealing region is 50 mm-100 mm. This can not only avoid the mounting force points of the mounting portions from being too far away from the sealing member so as to ensure the sealing and isolation effect of the sealing member on the first region and the second region, but also guarantees the connection strength between the battery and the external apparatus.

In some embodiments, the sealing region is coplanar with the second region. In this case, the mounting force point of each mounting portion is located in the same plane and at the same height as the sealing region, so that the load on the mounting force points and the sealing member is only applied in the vertical direction, reducing the lateral structural force on the box and the body, thereby improving the vehicle stiffness.

In some embodiments, the first region, the second region, and the sealing region are coplanar. In this case, the plane where the first region, the second region, and the sealing region are coplanar is in contact with the external apparatus, which results in a large contact area between the top surface of the box and the external apparatus, helping to improve the reliability of the connection between the box and the external apparatus. Additionally, the top structure of the box becomes more even, enhancing its aesthetic appeal. Furthermore, the lateral structural force on the box is further reduced.

In some embodiments, the mounting portion includes at least one mounting hole disposed on the top of the box, the mounting hole running through the second region. When connecting the box to the external apparatus, a connecting member can be connected to the top of the box from the second region peripheral to the top of the box, to increase the connection strength between the box and the external apparatus.

In some embodiments, the box further includes a sealing member, the sealing member being mounted in the sealing region. In this case, the box of the battery is sealedly connected to the external apparatus through the sealing member, to sealedly isolate the first region and the second region, achieving reliable sealing with low costs.

In some embodiments, the box includes a main body, where the main body encloses the accommodating cavity, and a top surface of the main body defines at least a portion of the top surface of the box, the first region and the sealing region being located on the top surface of the main body.

The top surface of the main body is divided into the first region and the sealing region surrounding outside the first region, and the first region can form a sealed interior of the body to achieve a sealed connection between the body and the main body.

In some embodiments, the box includes a lateral beam, where the main body has a circumferential sidewall disposed around a top outer edge of the main body, the lateral beam is disposed on the circumferential sidewall, and the top surface of the main body and a top surface of the lateral beam jointly define the top surface of the box. With the lateral beam disposed on the circumferential sidewall of the main body, the lateral beam can enhance the lateral structural strength of the main body, which in turn improves the lateral compression resistance of the box and the lateral compression resistance of the vehicle.

In some embodiments, the mounting portions are located in the second region defined by the top surface of the lateral beam. With the mounting portions disposed on the lateral beam, because the lateral beam does not have to define the accommodating cavity, there is no need to consider the effect of the mounting portions on the sealing of the accommodating cavity during arrangement of the mounting portions, allowing the mounting portions to be disposed more flexibly. Moreover, the lateral beams are located at the lateral edges of the box. In this case, disposing the mounting portions on the lateral beam provides a larger space for mounting the box onto the external apparatus more conveniently.

In some embodiments, a reserved distance is present between an outer edge of the sealing region close to the second region and the circumferential sidewall of the main body.

Providing a reserved distance between the outer edge of the sealing region close to the second region and the circumferential sidewall of the main body can reserve a sufficient space for deformation of the sealing member, preventing the sealing member from protruding beyond the top surface of the main body to other regions on the top of the box and interfering with the structures on the other regions.

In some embodiments, the lateral beam includes at least two sub-beams, where the sub-beams are spaced in sequence along the circumferential sidewall, a top surface of each sub-beam defining a portion of the top surface of the lateral beam; and the sub-beam is provided with a mounting portion.

The provision of sub-beams enhances the lateral compression resistance of the vehicle and improves its safety performance. Additionally, mounting portions can be disposed on the symmetrically disposed sub-beams, ensuring the uniform distribution of forces on the mounting portions.

In some embodiments, the main body includes a bearing member and a frame, where the frame encloses a cavity with at least a top end being open, the bearing member covers the top end of the cavity, the bearing member and the frame enclose at least a portion of the accommodating cavity; and the lateral beam is disposed on the circumferential sidewall defined by the frame.

In this way, a mounting base is formed for loading the battery cell and the lateral beam.

According to a second aspect, this application further provides a battery including the foregoing box and a battery cell, the battery cell being accommodated in the box.

In some embodiments, the box includes a main body, where the main body encloses the accommodating cavity, and the main body includes a bearing member located on the top of the box and configured for defining the accommodating cavity, the battery cell being provided on the bearing member. The battery cell is disposed underneath the bearing member, and shares with the bearing member the forces on the top of the battery box, thereby increasing the stiffness of the top of the battery box.

In some embodiments, the battery cell is suspended from the bearing member. The battery cell is suspended below the bearing member, and the bottom cover is located at the bottom of the box, so that during maintenance inside the battery, removing the bottom cover can expose the battery cell without having to removing the bearing member, making the maintenance of the battery more convenient. Moreover, during battery maintenance, the battery cell can be unmounted from or mounted to the bearing member from below. Especially when the bearing member is stressed as at least a portion of the chassis of the vehicle, the battery cell can be unmounted from or mounted to the bearing member from below without removing the bearing member, thus facilitating the maintenance of the battery.

In some embodiments, the battery cell is bonded to the bearing member. The bonding between the battery cell and the bearing member not only facilitates connection, but also simplifies the structure of the battery.

In some embodiments, an outer surface of the battery cell facing the bearing member is a first outer surface, the battery cell includes electrode terminals, and the electrode terminals are arranged on an outer surface of the battery cell other than the first outer surface. In this case, the electrode terminals are located on the outer surface of the battery cell other than the first outer surface. Various components (such as sampling harnesses, high-voltage harnesses, and protective structures) that are connected to the electrode terminals can be arranged in the space between the battery cell and the bottom cover and/or the space between the battery cell and the inner side of the main body, facilitating arrangement of the components. Moreover, the battery cell is connected to the bearing member through the first outer surface with no electrode terminals provided, allowing the battery cell to fit closely to the bearing member. This saves space between the battery cell and the bearing member and improves the spatial utilization of the battery.

In some embodiments, the battery cell has a second outer surface disposed facing away from the first outer surface, and the electrode terminals are arranged on the second outer surface. In this case, there is a buffer space between the second outer surface and the bottom cover, and a portion of the electrode terminal that extends out of the battery cell is located within the buffer space, so that the harness and connecting piece that are connected to the electrode terminal can be arranged in the buffer space. In addition, the buffer space can prevent the external force hitting the bottom cover from acting on the battery cell and damaging the battery cell. Therefore, the buffer space can not only interrupt the impact of external forces, but also allow for layout of the harness and the like, achieving two benefits at once.

According to a third aspect, this application further provides an electric apparatus including the foregoing battery, where the battery is configured to supply electrical energy to the electric apparatus.

In some embodiments, the electric apparatus includes a vehicle, the battery being provided at the bottom of a body of the vehicle. In this case, providing the battery at the bottom of the body does not occupy the internal space of the body, which helps reduce the volume and weight of the body.

In some embodiments, the battery is connected to the body via the top of the box, and the top of the box is configured to form at least a portion of a chassis of the body. In this case, the space conventionally occupied by the gap between the chassis and the battery is allocated to the battery to increase its space. This helps improve the energy of the battery, thus enhancing the driving range of the vehicle.

For details of one or more embodiments of this application, see the accompanying drawings and description below. Other features, purposes, and advantages of this application will become apparent from the specification, the accompanying drawings, and the claims.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, in all of the accompanying drawings, the same parts are indicated by the same accompanying reference signs. In the accompanying drawings:
FIG. 1 is a schematic structural diagram of a vehicle according to some embodiments of this application;
FIG. 2 is a schematic structural diagram of a battery cell according to some embodiments of this application;
FIG. 3 is a schematic exploded view of a battery according to some embodiments of this application;
FIG. 4 is another structural exploded view of a battery according to some embodiments of this application;
FIG. 5 is an enlarged view of position A shown in FIG. 4;
FIG. 6 is a schematic diagram of a partial structure of a battery according to some embodiments of this application;
FIG. 7 is an enlarged view of position B in FIG. 6;
FIG. 8 is a top view of the structure shown in FIG. 6;
FIG. 9 is a side view of the structure shown in FIG. 6;
FIG. 10 is a cross-sectional view of the structure along C-C in FIG. 9;
FIG. 11 is a schematic diagram of a partial structure of a battery according to some other embodiments of this application;
FIG. 12 is an exploded side view of the structure shown in FIG. 11;
FIG. 13 is a side view of the structure shown in FIG. 11;
FIG. 14 is an enlarged view of position D of the structure shown in FIG. 12;
FIG. 15 is a schematic diagram of an application scenario of the structure shown in FIG. 11;
FIG. 16 is a side view of the structure shown in FIG. 14;
FIG. 17 is a schematic diagram of a partial structure of a battery according to some other embodiments of this application;
FIG. 18 is a side view of the structure shown in FIG. 17;
FIG. 19 is an exploded view of the structure shown in FIG. 18;
FIG. 20 is a cross-sectional view of the structure along E-E in FIG. 18;
FIG. 21 is a top view of the structure shown in FIG. 17; and
FIG. 22 is a schematic structural diagram of a battery cell according to some embodiments of this application.

1000. vehicle; 100. battery; 200. body; 300. seat; 10. box; 10A. first portion; 10B. second portion; 11. main body; 11a. bearing member; 11b. frame; 11c. bottom cover; 11c1. cover portion; 11c2. installation portion; 11c3. fixing hole; 11c4. fixing member; n. circumferential sidewall; n1. first wall section; n2. second wall section; s. accommodating cavity; s1. battery chamber; s2. high-voltage chamber; 12. sealing member; 13. lateral beam; 13a. sub-beam; 13a1. first sub-beam; 13a2. second sub-beam; 131. upper arm beam; 132. lower arm beam; 13a3. mounting portion; k1. mounting hole; 13a4. routing portion; k2. routing groove; 14. side-impact reinforcing beam; 141. mounting beam; 141a. convex portion; 141a1. weight reduction channel; 141b. installation position; h. top surface of box; h1. top surface of main body; h2. top surface of lateral beam; ha. first region; hb. second region; hc. sealing region; 15. high-voltage compartment; 15a. compartment cover; 15b. compartment box; 16. center channel beam; 16a. routing channel; 16a1. wiring groove; 161. beam seat; 162. beam cover; 20. battery cell; 21. end cover; 21a, electrode terminal; 22. housing; 23. electrode assembly; m1. first outer surface; m2. second outer surface; m3. third outer surface; F1. first direction; F2. second direction.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of batteries is becoming more and more extensive. Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of batteries, market demands for the batteries are also expanding.

The inventors have noted that in connecting the box of the battery to the body, a sealing structure is generally provided achieve a sealed connection between the box and the body, and a fixing structure is additionally provided to fasten the box to the body. However, the different positions of the fixing structure and the sealing structure makes it impossible for the fixing force provided by the fixing structure to effectively secure the sealing member in its position. As a result, the sealing effect of the sealing member cannot be guaranteed, leading to poor connection rigidity between the box and the body.

To improve the sealing effect and connection rigidity between the box and the body, the applicants have found through research that the arrangement positions and distance of the fixing structure and the sealing structure can be controlled to ensure that the fixing structure reinforces the sealing of the sealing member, thus ensuring the sealing effect and improving the connection rigidity between the box and the body.

Based on the above considerations, to improve the sealing effect and connection rigidity between the box and the vehicle, the inventors, after in-depth research, have designed a box for battery, which is capable of accommodating battery cells inside. The box has a top surface facing away from an accommodating cavity. The top surface is divided into a first region, a sealing region, and a second region. The sealing region is used for mounting a sealing member, with the sealing member in sealed contact with a body. The second region is constructed with mounting portions and is fixedly connected to the body through the mounting portions. Additionally, a shortest distance between a geometric center of an orthographic projection of the mounting portion in the second region and an outer edge of the sealing region is controlled to be 30 mm-200 mm, so as to avoid the mounting force points of the mounting portions from being too far away from the sealing member. This not only guarantees the sealing effect of the sealing member on the inside of the body, but also reduces the mounting torque of each mounting portion mounted on the body and effectively shortens the arm of the mounting force to ensure the connection rigidity between the battery and the body.

The battery disclosed in the embodiments of this application may be used without limitation in electric apparatuses such as vehicles, ships, or aircrafts. The battery disclosed in this application may be used to constitute a power supply system of the electric apparatus. The mounting body involved in this application is a structure for mounting a battery in the electric apparatus.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle 1000 is used as an example for description of the following embodiments.

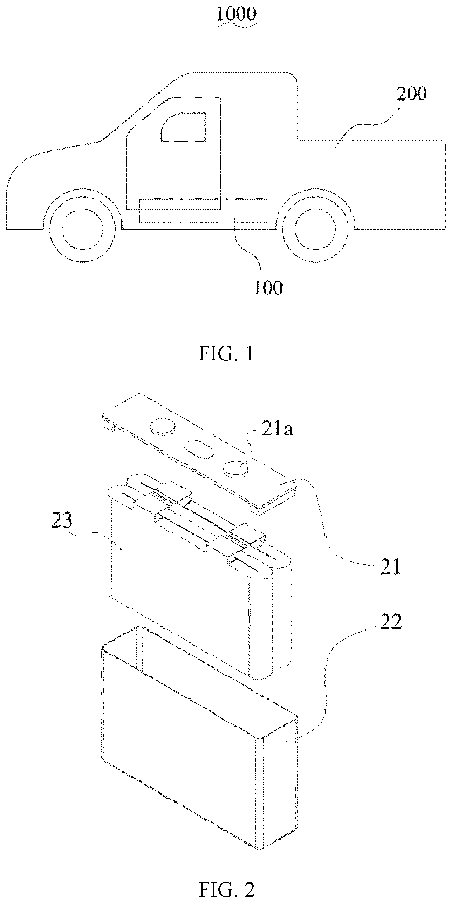

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be provided at the bottom or head or tail of the vehicle 1000. The battery 100 may be configured to supply power to the vehicle 1000. For example, the battery 100 may be used as an operational power source for the vehicle 1000. The vehicle 1000 may further include a controller and a motor, where the controller is configured to control the battery 100 to supply power to the motor, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a vehicle 1000 according to some embodiments of this application. The battery cell 20 refers to a smallest element constituting the battery 100. As shown in FIG. 2, the battery cell 20 includes an end cover 21, a housing 22, an electrode assembly 23, and other functional components.

The end cover 21 is a component that covers an opening of the housing 22 to isolate an internal environment of the battery cell 20 from the external environment. A shape of the end cover 21 is not limited and may be adapted to a shape of the housing 22 to fit the housing 22. Optionally, the end cover 21 may be made of a material with specified hardness and strength (for example, aluminum alloy), so that the end cover 21 is less likely to deform under extrusion and collision, enabling the battery cell 20 to have a higher structural strength and enhanced safety performance. Functional components such as an electrode terminal 21a may be provided on the end cover 21. The electrode terminal 21a may be configured to be electrically connected to the electrode assembly 23 for outputting or inputting electric energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be provided at an inner side of the end cover 21. The insulator may be configured to isolate an electrical connection component 11a2 in the housing 22 from the end cover 21 to reduce the risk of short circuit. For example, the insulator may be made of plastic, rubber, or the like.

The housing 22 is an assembly configured to form an internal environment of the battery cell 20 together with the end cover 21, where the formed internal environment may be configured to accommodate the electrode assembly 23, an electrolyte, and other components. The housing 22 and the end cover 21 may be separate components, an opening may be provided on the housing 22, and the end cover 21 covers the opening to form the internal environment of the battery cell 20. The end cover 21 and the housing 22 are not limited and may also be integrated. Specifically, the end cover 21 and the housing 22 may form a shared connection surface before other components are disposed inside the housing, and then the housing 22 is covered with the end cover 21 when inside of the housing 22 needs to be enclosed. The housing 22 may be of various shapes and sizes, such as a rectangular shape, a cylindrical shape, and a hexagonal prism shape. Specifically, a shape of the housing 22 may be determined according to a specific shape and size of the electrode assembly 23. The housing 22 may be made of various materials, such as copper, iron, aluminum, stainless steel, aluminum alloy, and plastic, which are not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a main body 11 of the electrode assembly 23, while parts of the positive electrode plate and the negative electrode plate that have no active substances separately constitute a tab. A positive tab and a negative tab may both be located at one end of the main body 11 or be located at two ends of the main body 11 respectively. During charge and discharge of the battery, a positive electrode active substance and a negative electrode active substance react with an electrolyte, and the tabs are connected to electrode terminals 21a to form a current loop.

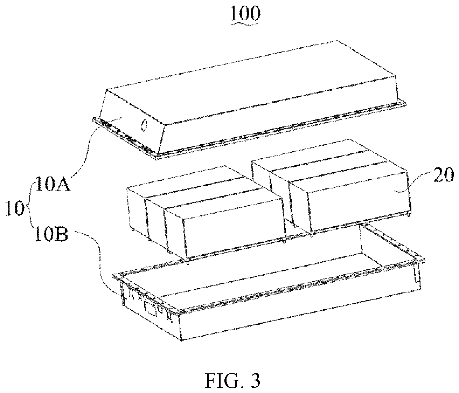

FIG. 3 is a schematic structural diagram of a battery 100 according to some embodiments of this application. The battery 100 includes a battery cell 20 and a box 10. The box 10 has an accommodating cavity s for accommodating the battery cell 20.

In the battery 100, the battery cells 20 are present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20. Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

The box 10 may be of a variety of shapes, for example, cylinder or cuboid. The box 10 may be specifically structured in multiple ways.

According to some embodiments of this application, referring to FIG. 3, this application provides a box 10 for a battery 200, the box 10 having an accommodating cavity s for accommodating the battery cell 20. The box 10 is configured to provide an accommodating space for the battery cell 20. The box may be a variety of structures. In some embodiments (as shown in FIG. 3), the box may include a first portion 10A and a second portion 10B. The first portion 10A and the second portion 10B fit together so that the first portion 10A and the second portion 10B jointly define a space for accommodating the battery cell. The second portion 1 may be a hollow structure with one end open, and the first portion 10A may be a plate-like structure, where the first portion 10A covers the open side of the second portion so that the first portion 10A and the second portion 10B jointly define the accommodating space. Alternatively, the first portion 10A and the second portion 10B may both be hollow structures with one side open, where the open side of the first portion 10A is engaged with the open side of the second portion 10B. Certainly, the box 10 formed by the first portion 10A and the second portion 10B may be of a variety of shapes, for example, cylinder or cuboid.

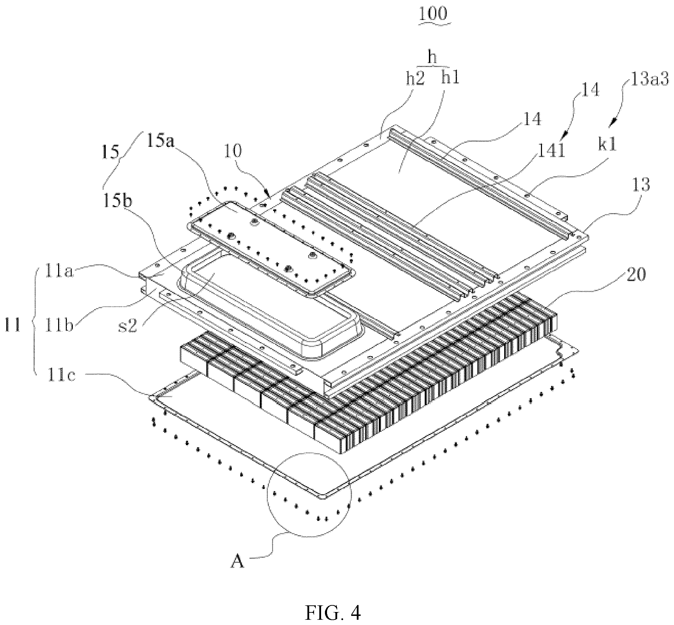

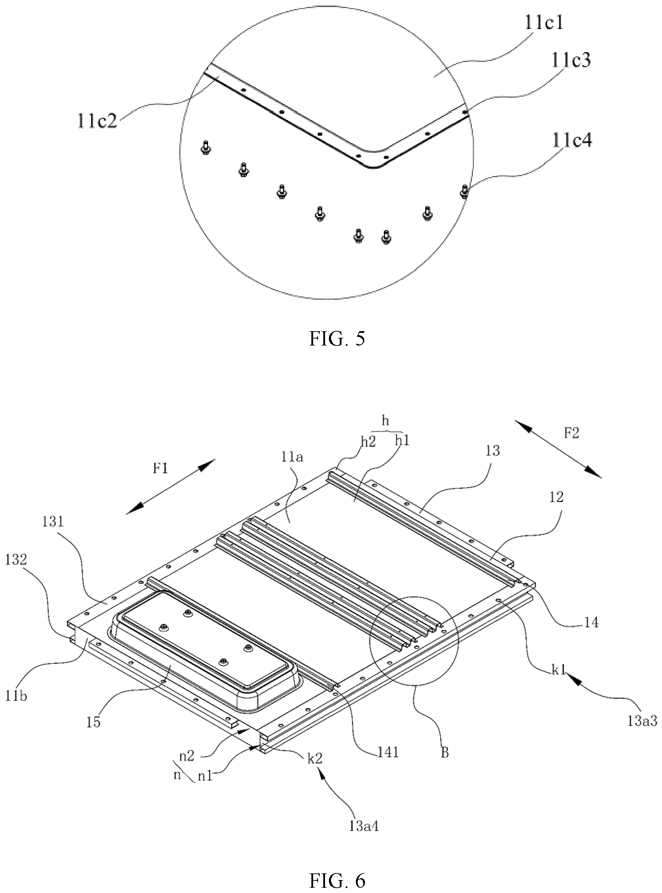

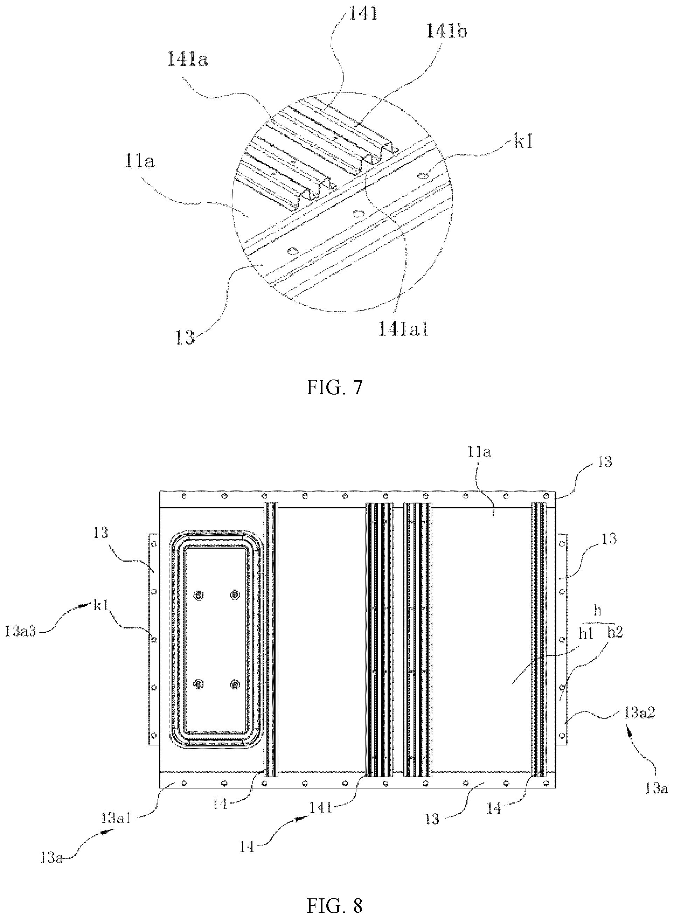

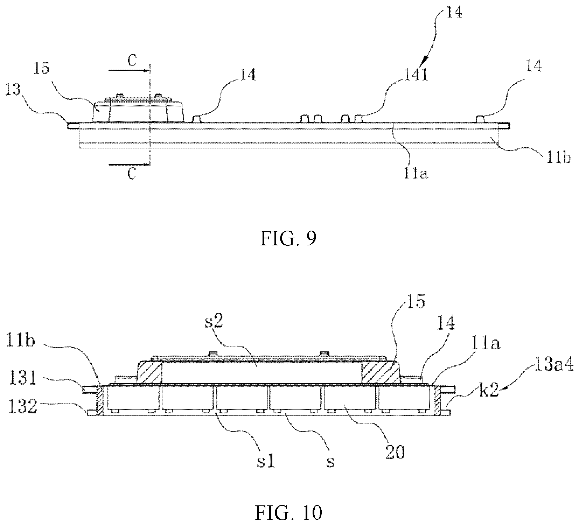

FIG. 4 is another structural exploded view of a battery 100 according to some embodiments of this application. FIG. 5 is an enlarged view of position A in FIG. 4. FIG. 6 is a schematic diagram of a partial structure of a battery 100 according to some embodiments of this application. FIG. 7 is an enlarged view of position B of the structure shown in FIG. 6, FIG. 8 is a top view of the structure shown in FIG. 6, FIG. 9 is a side view of the structure shown in FIG. 6, and FIG. 10 is a cross-sectional view of the structure along C-C shown in FIG. 9.

In some embodiments, referring to FIG. 4, the battery 100 is mounted to an external apparatus via the top of the box 10.

The top of the box 10 includes a top surface h of the box 10 and other structures provided on the top surface h of the box 10. The top surface h of the box 10 is an upper side surface of the box 10 in the vertical direction in the state of use. Other structures provided on the top surface h of the box 10 include but are not limited to connectors (such as bolts and rivets) connecting the top surface h of the box 10 to the external apparatus, and sealing structures (such as sealing strips) sealing the box 10 and the external apparatus.

The external apparatus is an apparatus for mounting the box 10. The external apparatus may be a partial structure in the electric apparatus that is used for mounting the box 10, or may be the remaining structure in the electric apparatus that, together with the battery 100, forms the electric apparatus. Taking the electric apparatus being a vehicle 1000 for example, the external apparatus may be a body 200 of the vehicle 1000, and the battery 100 may be mounted at the bottom of the body 200, and is mounted onto the body 200 via its top.

In this case, the battery 100 is mounted to the external apparatus via the top of the box 10. Such arrangement results in a smaller connection structure between the box 10 and the external apparatus, lower cost, and a more compact design, as compared to an arrangement where the box 10 is located at the bottom of the external apparatus.

Certainly, in other embodiments, the battery 100 may alternatively be mounted to the external apparatus via the bottom, side, or other positions of the box 10.

In some embodiments, referring to FIG. 4, the box 10 includes a main body 11, the main body 11 enclosing an accommodating cavity s.

The main body 11 may be an integrally formed structure or may be assembled from multiple parts. Understandably, the main body 11 is a hollow shell-like structure that itself encloses the accommodating cavity s. Without limitation, the main body 11 may be assembled from a first sub-portion (not shown) and a second sub-portion (not shown). In one example, the first sub-portion encloses an accommodating cavity s with one end open, and the second sub-portion covers the open end of the accommodating cavity s. In another example, the first sub-portion encloses a first space with one end open, the second sub-portion encloses a second space with one end open, and the two open ends of the first sub-portion and the second sub-portion fit together to form the accommodating cavity s composed of the first space and the second space. The first sub-portion and the second sub-portion may be welded, snap-fit, fastened together, or the like. The first sub-portion and the second sub-portion may be made of plastic, metal, or other materials.

In some embodiments, referring to FIG. 4, the top of the main body 11 forms at least a portion of the top of the box 10.

The top of the main body 11 is a structure located at the uppermost position of the main body 11 in the vertical direction. The uppermost position of the main body 11 is the uppermost position of the box 10, such that the top of the main body 11 forms at least a portion of the top of the box 10. In a case that the top of the main body 11 forms the entire top of the box 10, the top of the main body 11 is the top of the box 10, and the entire top of the box 10 is involved in defining the accommodating cavity s. In a case that the top of the main body 11 forms a portion of the top of the box 10, the top of the box 10 has still a portion of the structure that is not involved in defining the accommodating cavity s, such as the lateral beam 13 described below. For details, see the description below.

In a case that the battery 100 is mounted to the external apparatus via the top of the box 10, the top of the main body 11 is also located at a position in the battery 100 closest to the external apparatus. A distance between the top of the main body 11 and the external apparatus refers to a distance, in the vertical direction, between the highest point of the top of the main body 11 and the external apparatus located above it.

Understandably, referring to FIG. 6, the main body 11 has a circumferential sidewall n provided around an outer edge of its top.

The main body 11 has a top at the uppermost position in the vertical direction, and naturally has a bottom at the lowermost position, where the bottom may be a bottom surface and structures provided on the bottom surface, or an open bottom.

An outer surface, facing away from the accommodating cavity s, of a structure sandwiched between the top and the bottom forms the circumferential sidewall n. An extension direction of the plane where the circumferential sidewall n is located intersects with the plane where the top is located. The circumferential sidewall n may be in the shape of a ring, a quadrilateral, or the like formed by multiple wall sections connected end to end. For details, see the description below.

Understandably, referring to FIG. 6, the box 10 also has a top surface h facing away from the accommodating cavity s.

The top surface h of the box 10 is a surface of the top of the box 10 on a side facing away from the accommodating cavity s. In a case that the battery 100 is assembled to the external apparatus via the top of the box 10, the top surface h is disposed facing the external apparatus and forms a position in the battery 100 closest to the external apparatus.

In some embodiments, referring to FIG. 6, the top surface h of the box 10 is configured to be in contact with the external apparatus (not shown) in which the battery 100 is mounted.

The battery 100 is mounted to the external apparatus via the top of the box 10, and a surface of the box 10 facing away from the accommodating cavity s is in close contact with the external apparatus, allowing for a tight connection between the battery 100 and the external apparatus. Such arrangement results in a smaller connection structure between the box 10 and the external apparatus, lower cost, and a more compact design, as compared to an arrangement where the top surface h of the box 10 is not in contact with the external apparatus.

In some embodiments, referring to FIG. 6, the top of the box 10 is constructed with mounting portions 13a3, and the battery 100 is mounted to the external apparatus via the mounting portions 13a3.

The mounting portions 13a3 as a portion of the top of the box 10 are not involved in defining the accommodating cavity s. The mounting portion 13a3 refers to a specialized structure provided on the top of the box 10 for connecting to a connecting member (for example, a bolt or a rivet) of the external apparatus. The connecting member may be connected to the mounting portion 13a3 at one end and connected to the external apparatus at the other end to fixedly connect the battery 100 to the external apparatus. Understandably, the top of the main body 11 serves as at least a portion of the top of the box 10, and the mounting portion 13a3 may be provided on the top of the main body 11 or on another structure constructed to form the top of the box 10 (such as the top of the lateral beam 13 as mentioned below).

In a case that the battery 100 is mounted to the external apparatus via the mounting portion 13a3, the top surface h of the box 10 is in contact with the external apparatus, which not only improves the connection strength but also ensures a compact connection structure between the box 10 and the external apparatus.

The mounting portion 13a3 may also have a connecting function itself (such as a lifting ring), and a corresponding connecting member (such as a hook) can be provided on the external apparatus to directly implement a connection with the mounting portion 13a3. In other embodiments, the connection member may not be provided, and the connection between the mounting portion 13a3 and the external apparatus may be realized directly by other means, including but not limited to snap-fit, plug-in, threaded connection, riveting, welding, and bonding. This is not specifically limited in this application.

In some embodiments, referring to FIG. 6, the mounting portion 13a3 includes at least one mounting hole k1 provided on the top of the box 10.

The mounting hole k1 may be formed on the top of the box 10 by drilling. Each mounting hole k1 is provided with a hole and openings at two ends of the hole, and the hole and the openings at two ends of the hole allow the connecting member to run through them and be secured to the structure provided with the mounting hole k1, thus connecting the external apparatus and the top of the box 10 via the connecting member.

The connecting member may be provided as a rivet, and a fixing hole 11c3 is provided in the external apparatus at a position corresponding to the mounting hole k1. The rivet runs through the fixing hole 11c3 and the mounting hole k1 to secure the external apparatus and the box via a nut. Alternatively, the connecting member may be provided as a screw, and the mounting hole k1 is provided as a threaded hole. The screw runs through the mounting hole k1 to implement a threaded connection to the box 10.

Specifically, all mounting holes k1 may be provided in the vertical direction to secure the battery 100 to the bottom of the external apparatus in the vertical direction. Understandably, to realize the connection stability and uniform distribution of forces between the top of the box 10 and the external apparatus, the arrangement positions, arrangement distances, and the like of all mounting holes k1 can be controlled, as described in detail below.

Understandably, in addition to the mounting hole k1, the mounting portion 13a3 may also include another structure capable of achieving mounting, such as a hook.

In some embodiments, referring to FIG. 4 and FIG. 6, the main body 11 includes a bearing member 11a and a frame 11b, where the frame 11b enclose a cavity with at least a top end being open, the bearing member 11a covers the top end of the cavity, and the bearing member 11a and the frame 11b enclose at least a portion of the accommodating cavity s.

The frame 11b itself encloses a cavity with at least its top end open, and the bearing member 11a covers the top of the cavity, meaning that the bearing member 1 1a is located on the top of the box 10 and is configured to define the accommodating cavity s. The frame 11b and the bearing member 11a may be made of the same material, such as aluminum alloy, copper alloy, steel, or plastic. Certainly, the frame 11b, the bearing member 11a, and the bottom cover 11c may alternatively be made of different materials. This is not specifically limited. In orthographic projection in the vertical direction, the frame 11b may be rectangular, circular, polygonal, or the like. This is not specifically limited. The bearing member 11a may be a structure such as a carrier plate, a carrier sheet, or a carrier block.

The top surface h1 of the main body 11 may be formed entirely by a top surface of the bearing member 11a. In this case, the frame 11b as a whole is located below the bearing member 11a. The top surface h1 of the main body 11 may alternatively be formed by the top surface of the bearing member 11a and the top surface of the frame 11b. In this case, the bearing member 11a is located inside the frame 11b, and the top surface of the bearing member 11a and the top surface of the frame 11b may be either coplanar or non-coplanar.

The bearing member 11a is fixedly connected to or integrally formed with the frame 11b. The bearing member 11a and the frame 11b are integrally formed by injection molding, die casting, forging, cold pressing, hot pressing, or the like. The bearing member 11a and the frame 11b may be fixedly connected by a fastener, a snap-fit structure, welding, bonding, hot-melt connection, or the like.

The circumferential sidewall n of the main body 11 is mainly formed by a circumferential sidewall n of the frame 11b. The circumferential sidewall n of the frame 11b is an outer surface provided around the bearing member 11a and facing away from the cavity defined by itself.

In some embodiments, referring to FIG. 4 and FIG. 5, the main body 11 further includes a bottom cover 11c. The bottom cover 11c, the bearing member 11a, and the frame 11b enclose the accommodating cavity s for accommodating the battery cell 20.

Understandably, the cavity in the frame 11b also extends through the bottom of the frame 11b, and the bottom cover 11c covers the bottom of the frame 11b, and forms the accommodating cavity s of the box 10 together with the frame 11b and the bearing member 11a.

Specifically, the bottom cover 11c may be but is not limited to a plate-like structure, a block-like structure, or the like, and may be flat, curved, or the like. This is not specifically limited. When the battery cell 20 is located in the accommodating cavity s, the battery cell 20 may be disposed on the bottom cover 11c and/or the bearing member 11a and/or the frame 11b.

The bottom cover 11c and the frame 11b may be fixed by welding, hot-melt connection, bonding, fastening connection, snap-fit, or the like. Fastening connection refers to achieving a connection via a fixing member 11c4, where the fixing member 11c4 includes a bolt, a pin, a rivet, a dowel pin, a screw, or other components. Snap-fit refers to achieving fixation via a snap-fit structure. For example, the bottom cover 11c has a snap hook and the frame 1 1b has a snap slot, and the snap-fit fixation of the bottom cover 11c and the frame 11b can be achieved when the snap hook snaps into the snap slot. Certainly, the connection method between the bottom cover 11c and the frame 11b is not limited thereto, and is not exhaustively listed in this application.

In this case, based on the frame 11b, the accommodating cavity s of the battery 100 can be formed by respectively connecting the bearing member 11a and the bottom cover 11c to the two ends of the frame 11b in the vertical direction. The structure of the main body 11 is relatively simple.

In some embodiments, referring to FIG. 4 and FIG. 5, the bottom cover 11c has a cover portion 11c1 and an installation portion 11c2, where the installation portion 11c2 surrounds and connects to an edge of the cover portion 11c1, the cover portion 11c1 is configured for defining the accommodating cavity s, and the installation portion 11c2 is connected to the frame 11b.

The cover portion 11c1 being configured for defining the accommodating cavity s means that the cover portion 11c1, together with the bearing member 11a and the frame 11b, encloses the accommodating cavity s. The installation portion 11c2 is connected to the frame 11b without being involved in defining the accommodating cavity s. The cover portion 11c1 may be a plate-like or block-like member, and may be a flat or curved plate-like member. This is not specifically limited. As can be seen from FIG. 4 and FIG. 5, the installation portion 11c2 enclosing the edge of the cover portion 11c1 means that the installation portion 11c2 is continuously provided along the edge of the cover portion 11c1 to form a closed structure connected end to end. Understandably, in the projection in the vertical direction, the installation portion 11c2 has a certain width, allowing for appropriate contact area with the frame 1 1b to facilitate the positioning and installation between the installation portion 11c2 and the frame 11b.

The cover portion 11c1 and the installation portion 11c2 may be integrally formed. When the bottom cover 11c is made of metal (such as aluminum, iron, or stainless steel), the cover portion 11c1 and the installation portion 11c2 may be integrally formed by die-casting, forging, hot pressing, cold pressing, or the like. When the bottom cover 11c is made of plastic (such as polypropylene, polyethylene, or ABS (Acrylonitrile Butadiene Styrene plastic)), the cover portion 11c1 and the installation portion 11c2 may be integrally formed by injection molding. The cover portion 11c1 and the installation portion 11c2 may alternatively be separately formed and connected together. When the cover portion 11c1 and the installation portion 11c2 are made of metal, the cover portion 11c1 and the installation portion 11c2 may be welded or bonded together. When the cover portion 11c1 and the installation portion 11c2 are made of plastic, the cover portion 11c1 and the installation portion 11c2 may be bonded together. Certainly, the cover portion 11c1 and the installation portion 11c2 may alternatively be fixedly connected together by other means such as snap-fit or riveting.

The cover portion 11c1 and the installation portion 11c2 may be on a same plane. Specifically optionally, both surfaces of the cover portion 11c1 and the installation portion 11c2 facing the bearing member 11a are on a same plane, and/or both surfaces of the cover portion 11c1 and the installation portion 11c2 facing away from the bearing member 11a are on a same plane. When both surfaces of the cover portion 11c1 and the installation portion 11c2 facing the bearing member 11a are in a same plane and both surfaces of the cover portion 11c1 and the installation portion 11c2 facing away from the bearing member 11a are in a same plane, the cover portion 11c1 and the installation portion 11c2 may form a flat plate-like bottom cover 11c.

The cover portion 11c1 and the installation portion 11c2 may alternatively be not on a same plane. Specifically, the cover portion 11c1 is recessed with respect to the installation portion 11c2 toward the bearing member 11a, or the cover portion 11c1 protrudes with respect to the installation portion 11c2 away from the bearing member 11a. This is not specifically limited. The thicknesses of the cover portion 11c1 and the installation portion 11c2 may be equal or unequal, which is not specifically limited.

In this case, the bottom cover 11c defines the accommodating cavity s via the cover portion 11c1 and is connected to the frame 11b via the installation portion 11c2, resulting in a distinct structure that is easy to install.

Understandably, when the bottom cover 11c is detachably connected to the frame 11b, the bottom cover 11c is detachably connected to the frame 11b via the installation portion 11c2, that is, the installation portion 11c2 is detachably connected to the frame 11b. The detachable connection between the installation portion 11c2 and the frame 11b can be achieved by disposing the installation portion 11c2 as the portion of the bottom cover 11c that is detachably connected to the frame 11b.

In some embodiments, the installation portion 11c2 is detachably connected to the frame 11b.

Specifically, the bottom cover 11c further includes a fixing hole 11c3 provided on the installation portion 11c2, and the fixing member 11c4 is fastened to the frame 11b after running through the fixing hole 11c3 on the installation portion 11c2. The fixing hole 11c3 is a through-hole extending through the installation portion 11c2 in the vertical direction. Specifically, the fixing hole 11c3 may be a smooth through-hole (for example, when the fixing member 11c4 is a rivet), a threaded through-hole (for example, when the fixing member 11c4 is a screw), or a through-hole of other types (for example, a hexagonal hole, a square hole, or a waist-shaped hole). The specific form of the fixing hole 11c3 depends on the specific form and specific arrangement method of the fixing member 11c4, which is not detailed herein.

In some embodiments, referring to FIG. 6, FIG. 8 and FIG. 9, the box 10 includes a lateral beam 13, the lateral beam 13 being provided on the circumferential sidewall n of the main body 11.

The lateral beam 13 is a beam structure provided on the circumferential sidewall n of the main body 11 to enhance the strength of the main body 11. Understandably, the lateral beam 13 is disposed outside the main body 11. Specifically, the main body 11 and the lateral beam 13 are integrally connected as a whole, or may be connected as a whole by assembly. The integral connection method includes but is not limited to welding, integral formation, fusion bonding, and the like. The assembly connection method includes but is not limited to snap-fit, fastening connection, and the like.

The lateral beam 13 may be arranged in the entire circumferential sidewall n of the main body 11, or may be arranged on only part of the circumferential sidewall n of the main body 11. Without limitation, the lateral beam 13 is arranged around the circumferential sidewall n of the main body 11, so as to enhance the strength of the main body 11 from multiple lateral directions of the main body 11. Specifically, the lateral beams 13 are arranged continuously or intermittently around the circumferential sidewall n of the main body 11. When continuously arranged, the lateral beams 13 may form a ring-shaped beam. When intermittently arranged, the lateral beams 13 may include multiple beam sections spaced around the circumferential sidewall n of the main body 11.

In a practical application scenario, the box 10 is used for the battery 100 and the battery 100 is applied to the vehicle 1000, the top of the box 10 being mounted on the vehicle 1000 and the top of the box 10 forming a chassis structure of the vehicle 1000. When the box 10 of the battery 100 is used as the chassis of the vehicle 1000, the lateral structure of the box 10 is susceptible to extrusion due to external impacts (such as stones splashing and hitting the lateral position of the box 10 while the vehicle 1000 is traveling, or the lateral position being hit by another vehicle 1000). In this case, with the lateral beam 13 disposed on the circumferential sidewall of the main body 11, the lateral beam 13 can enhance the lateral structural strength of the main body 11, which in turn improves the lateral compression resistance of the box 10 and the lateral compression resistance of the vehicle 1000, thus improving the safety of the vehicle 1000.

Understandably, when the main body 11 includes the above-described bearing member 11a and frame 11b, the lateral beam 13 is provided on the circumferential sidewall n defined by the frame 11b.

The cavity formed by the frame 11b mainly constitutes the accommodating cavity s of the box 10. Since the accommodating cavity s has a certain height to accommodate multiple battery cells 20, the frame 11b also has a certain height, and thus the circumferential sidewall n of the frame 11b has a large area. In this case, the lateral beam 13 is disposed on the circumferential sidewall n defined by the frame 11b, allowing for greater flexibility in terms of mounting method, mounting area, and arrangement method of the lateral beam 13.

Further, in an embodiment, the lateral beam 13 is fixedly connected to or integrally formed with the frame 11b. The lateral beam 13 and the frame 11b may be fixedly connected by welding, fusion welding, riveting, threaded connection, or the like, or may be formed as a whole through integrated processes (such as stamping or die casting).

When the lateral beam 13 and the frame 11b are integrally formed, the assembly steps of the box 10 can be reduced and the production process of the box 10 can be accelerated. When the lateral beam 13 and the frame 11b are fixedly connected, the formation processes of the lateral beam 13 and the frame 11b are simple, reducing the process cost of the box 10.

In some embodiments, referring to FIG. 10, the lateral beam 13 includes at least two sub-beams 13a, the sub-beams 13a being sequentially spaced apart along the circumferential sidewall n. The sub-beams 13a are the base units forming the lateral beam 13, and the position of the lateral beam 13 can be flexibly arranged on the circumferential sidewall n of the main body 11 by setting the positions of the sub-beams 13a.

The lateral beam 13 is formed by having at least two sub-beams 13a spaced apart along the circumferential sidewall n of the main body 11, meaning that at least two sub-beams 13a are spaced apart along an extension direction of the circumferential sidewall n to form an enclosing structure around the main body 11, thus enhancing the strength of the main body 11 from multiple lateral direction of the main body 11.

The structure of the sub-beams 13a can take various forms. The structures of the sub-beam 13a may be the same or different. For example, the sub-beam 13a is a longitudinally extending solid beam. For another example, the sub-beam 13a is a longitudinally extending hollow beam. The cross-sectional shape of each sub-beam 13a may be H-shaped, U-shaped, or be of other structural forms.

In this case, the lateral beam 13 is formed by combination of multiple sub-beams 13a, allowing for more flexible arrangement of the lateral beam 13. Installation can be completed simply by installing the sub-beams 13a one by one. Compared to an integral lateral beam 13, this type of lateral beam allows for more convenient and efficient positioning during the installation.

In some embodiments, still referring to FIG. 10, the at least one sub-beam 13a includes an upper arm beam 131 and a lower arm beam 132, where the upper arm beam 131 and the lower arm beam 132 are vertically spaced apart, and are both connected to the main body 11.

The vertical direction corresponds to the direction in which the top and bottom of the main body 11 are arranged. In other words, the upper arm beam 131 is near the top of the main body 11 and the lower arm beam 132 is near the bottom of the main body 11. Understandably, both the upper arm beam 131 and the lower arm beam 132 extend along the circumferential direction of the main body 11 and fit against the circumferential sidewall n of the main body 11. The upper arm beam 131 and the lower arm beam 132 are spaced apart and are connected via the main body 11, and a pore channel may be formed therebetween, where the pore channel may serve as a structure for weight reduction as well as a structure for harness routing.

In this case, the structure of the main body 11 is strengthened through the upper arm beam 131 and the lower arm beam 132. Because the upper arm beam 131 and the lower arm beam 132 are arranged separately, the impact force on the box 10 can be dispersed, resulting in more even distribution of external force throughout the box 10. In addition, the upper arm beam 131 and the lower arm beam 132 are vertically spaced apart, allowing the sub-beam 13a to withstand compression from the front, rear, left, or right directions of the vehicle 1000, making it more adaptable to the actual operating conditions of the vehicle 1000. In addition, the spaced arrangement of the upper arm beam 131 and the lower arm beam 132 can reduce the weight of the box 10 and implement other functions.

In other embodiments, an intermediate beam (not shown) may also be provided between the upper arm beam 131 and the lower arm beam 132. The intermediate beam is connected between the upper arm beam 131 and the lower arm beam 132, further enhancing the structural strength of the sub-beam 13a and improving the lateral compression resistance of the box 10.

In some embodiments, at least one of the upper arm beam 131 and the lower arm beam 132 is a hollow beam. A hollow beam means that the interior of the beam is a hollow structure, meaning that there is no solid material filled inside the beam. In this case, the upper arm beam 131 and the lower arm beam 132 are hollow beam structures, which can reduce their own weight, thereby addressing the problem of high power consumption of the battery 100 due to its heavy weight when the battery 100 including the box 10 is applied to the electric apparatus such as the vehicle 1000. Moreover, the hollow beam structure can dissipate lateral compression through its internal space, reducing the extent of damage to the battery 100 when subjected to lateral compression.

In some embodiments, referring to FIG. 6, the circumferential sidewall n includes at least two first wall sections n1 extending along a first direction F1 and spaced apart; and the at least two sub-beams 13a include two first sub-beams 13a1, where the two first sub-beams 13a1 are respectively arranged on the two first wall sections n1 and both extend along the first direction F1.

In a practical application, when the battery 100 including the box 10 is used in the vehicle 1000 and the top of the box 10 forms a chassis of the vehicle 1000, the first direction F1 may correspond to a front-rear direction of the vehicle 1000. The first wall sections n1 in the circumferential sidewall n of the main body 11 correspond to the circumferential sidewalls n in the left and right directions of the battery 100. The first wall sections n1 extend along the first direction F1, that is, along the front-rear direction of the vehicle 1000. The two first wall sections n1 are spaced apart in a left-right direction of the vehicle 1000. Each of the first wall sections n1 is provided with a sub-beam 13a, and each sub-beam 13a extends in the same direction as its corresponding first wall section n1.

The structure of the sub-beams 13a on the respective first wall sections n1 may be the same, so as to ensure the consistent compression resistance on the left and right sides of the vehicle 1000. Further, the sub-beams 13a on the first wall sections n1 include the upper arm beam 131 and the lower arm beam 132 mentioned in the above embodiment. In this case, the sub-beam 13a has a strong compression resistance, which can make up for the weak structure on the left and right sides of the vehicle 1000, enhance the compression resistance on the left and right sides of the vehicle 1000, and improve the safety of the vehicle 1000.

In this case, provision of the sub-beam 13a on each first wall section n1 can strengthen the structural strength of each first wall section n1 and improve the compression resistance of each first wall section n1, that is, improve the compression resistance on the left and right sides of the vehicle 1000. Understandably, since each sub-beam 13a extends along the first direction F1, the bending resistance on the front and rear directions of the vehicle 1000 can also be improved.

In some embodiments, still referring to FIG. 6, the circumferential sidewall n further includes two second wall sections n2 extending along a second direction F2 perpendicular to the first direction F1 and spaced apart, where the two first wall sections n1 are alternately connected to the two second wall sections n2; and the at least two sub-beams 13a further include two second sub-beams 13a2, where the two second sub-beams 13a2 are respectively arranged on the two second wall sections n2 and both extend along the first direction F1.

In practical application, the second direction F2 may correspond to the left-right direction of the box 10. In this case, the second wall sections n2 correspond to the circumferential sidewalls n in the front and rear directions of the battery 100. The second wall sections n2 extend along the second direction F2, that is, along the left-right direction of the vehicle 1000.

The structure of the sub-beams 13a on the respective second wall sections n2 may be the same, so as to ensure the consistent compression resistance on the front and rear sides. Further, the sub-beam 13a on the first wall section n1 may include only the upper arm beam 131 mentioned in the above embodiment, and the upper arm beam 131 is provided near the top of the main body 11. In this case, the sub-beam 13a has weak compression resistance, mainly because the vehicle 1000 usually has structures such as bumpers in the front and rear directions to resist compression. When the vehicle 1000 is subjected to compression from the front and rear directions, the compression resistance can be achieved mainly through the front and rear bumpers provided therein. In such cases, there is a weak demand for the sub-beam 13a on the second wall section n2 to provide compression resistance, so a relatively simple sub-beam 13a structure can be adopted, thus reducing the cost of the battery 100 and the cost of the vehicle 1000.

In this case, provision of the sub-beam 13a on each second wall section n2 can strengthen the structural strength of each second wall section n2 and improve the compression resistance of each second wall section n2, that is, improve the compression resistance on the left and right sides of the vehicle 1000. Understandably, since each sub-beam 13a extends along the second direction F2, the bending resistance on the left and right directions of the vehicle 1000 can also be improved.

In some embodiments, still referring to FIG. 6, the lateral beam 13 includes at least two first sub-beams 13a1 and at least two second sub-beams 13a2 that are all disposed on the circumferential sidewall n. The first sub-beams 13a1 extend along the first direction F1 and are spaced apart from each other, and the second sub-beams 13a2 extend along the second direction F2 intersecting the first direction F 1 and are spaced apart from each other.

In this case, the sub-beam 13a provided on the first wall section n1 is the first sub-beam 13a1, and the sub-beam 13a provided in the second wall section n2 is the second sub-beam 13a2. The two first sub-beams 13a1 can enhance the compression resistance of the box 10 in the left and right directions of the vehicle 1000, and the two second sub-beams 13a2 can enhance the compression resistance of the box 10 in the front and rear directions of the vehicle 1000. In this way, the overall lateral compression resistance of the vehicle 1000 can be improved, thus enhancing the safety performance of the vehicle 1000.

In some embodiments, still referring to FIG. 6, the lateral beam 13 is constructed with a mounting portion 13a3 at its top.

For the mounting portion 13a3, reference may be made to the above description, and details are not repeated herein. In this case, the mounting portion 13a3 is provided on the top of the lateral beam 13, so that the box 10 of this embodiment of this application can be obtained by adding the lateral beam 13 to the existing box 10 structure. In this way, the reconstruction cost can be greatly reduced. With the mounting portions 13a3 disposed on the lateral beam 13, because the lateral beam 13 does not participate in defining the accommodating cavity s, there is no need to consider the effect of the mounting portions 13a3 on the sealing of the accommodating cavity s during arrangement of the mounting portions 13a3, allowing the mounting portions 13a3 to be disposed more flexibly. Moreover, the lateral beams 13 are located at the lateral edges of the box 10. In this case, disposing the mounting portions 13a3 on the lateral beam 13 provides a larger space for mounting the box 10 onto the external apparatus more conveniently.

In some embodiments, the mounting portion 13a3 includes at least one mounting hole k1 provided on the top of the lateral beam 13.

For the mounting hole k1, reference may be made to the above description, and details are not repeated herein. The mounting hole k1 being provided on the top of the lateral beam 13 also has the beneficial effect of the mounting portion 13a3 being provided on the top of the lateral beam 13. Details are not described herein.

In some embodiments, the top surface h1 of the main body 11 and the top surface h2 of the lateral beam 13 together define a top surface h of the box 10.

The top surface h1 of the main body 11 is an outer surface of a side of the main body 11 that is located on the top of the main body 11 and faces away from the accommodating cavity s. The top surface h2 of the lateral beam 13 is an outer surface of a side of the lateral beam 13 that is located on the top of the lateral beam 13. When the lateral beam 13 includes the upper arm beam 131 and the lower arm beam 132 in the above embodiment, the top surface h2 of the lateral beam 13 is an outer surface of a side of the upper arm beam 131 that faces away from the lower arm beam 132.

When the box 10 includes both the main body 11 and the lateral beam 13 in the above embodiment, the top surface h of the box 10 may be defined jointly by the top surface h1 of the main body 11 and the top surface h2 of the lateral beam 13. The top surface h1 of the main body 11 and the top surface h2 of the lateral beam 13 may be coplanar. This allows for a larger contact area between the top surface h of the box 10 and the external apparatus, helping to improve the reliability of the connection between the box 10 and the external apparatus. Additionally, the top structure of the box 10 becomes more even, enhancing its aesthetic appeal. Certainly, the top surface h1 of the main body 11 and the top surface h2 of the lateral beam 13 may alternatively be not coplanar.

Understandably, when the lateral beam 13 includes at least two sub-beams 13a, the top surface of each sub-beam 13a defines a portion of the top surface h2 of the lateral beam 13, and the sub-beam 13a is provided with a mounting portion 13a3. It may be that some of the sub-beams 13a are provided with the mounting portion 13a3, or that all of the sub-beams 13a are provided with the mounting portion 13a3. When some of the sub-beams 13a are provided with the mounting portion 13a3, to ensure uniform distribution of forces on the mounting portions 13a3, mounting portions 13a3 are provided on symmetrically arranged sub-beams 13a. The symmetrically arranged sub-beams 13a include the two first sub-beams 13a1 in the above embodiment, and may also include the two second sub-beams 13a2 in the above embodiment.

In some embodiments, referring to FIG. 6 and FIG. 10, the box 10 is constructed with a routing portion 13a4 on its outer wall. The routing portion 13a4 is located below the top surface h of the box 10, and is formed with a routing space for harnesses.

The outer wall of the box 10 is an outer surface that faces away from an inner surface of the box 10 that defines the accommodating cavity s. The routing portion 13a4 is disposed below the top surface of the box 10. To be specific, the routing portion 13a4 is provided on the outer wall of the box 10 below the top surface h. The outer wall of the box 10 below its top surface h includes a bottom surface and a sidewall connecting the top surface h and the bottom surface.

When the box 10 includes only the main body 11, the sidewall of the box 10 is the circumferential sidewall n of the main body 11. When the box 10 includes the main body 11 and the lateral beam 13, the sidewall of the box 10 includes the circumferential sidewall n of the main body 11 that is not covered by the lateral beam 13 and a surface of the lateral beam 13 that faces away from the main body 11.

The routing portion 13a4 is disposed outside the accommodating cavity s and has a routing space for the passage of a harness for electrically connecting the battery cell and the electric component. The specific form of the routing space is not limited, as long as there is a wire inlet for the harness to enter and a wire outlet for the harness to exit. The wire inlet and the wire outlet can be a same opening. The routing space may be a routing hole or a routing groove k2.

Specifically, a routing portion 13a4 may be provided on the circumferential outer wall of the box 10. In this case, the harness can be routed through the side of the box 10, allowing for convenient wiring. Specifically, a routing portion 13a4 may alternatively be provided on the bottom surface of the box 10. In this case, the harness can be routed via the bottom of the box 10.

As such, the routing portion 13a4 is formed on the outer wall of the box 10 and the harness is routed via the routing space formed by the routing portion 13a4, which can effectively protect the harness, preventing unnecessary safety hazards caused by the harness being compressed to deform when the vehicle 1000 is subjected to external compression.

In a further embodiment, still referring to FIG. 6 and FIG. 10, the routing portion 13a4 is arranged on a sidewall of the box 10 adjacent to its own top surface h.

The sidewall is an outer surface of the box 10 connecting its top surface h and bottom surface (a surface opposite the top surface h). The routing portion 13a4 may be provided on only some of the sidewalls of the box 10, such as one or two sidewalls of the box 10 in the first direction F1, or one or two sidewalls of the box 10 in the second direction F2. Certainly, the routing portion 13a4 may alternatively be provided on all of the sidewalls of the box 10.

In this case, with the routing portion 13a4 provided on the sidewall of the box 10, a large operating space of the box 10 in the lateral orientation better facilitates arrangement of the harness.

In some embodiments, the routing portion 13a4 is arranged in two sidewalls of the box 10 that are both adjacent to the top surface h and face away from each other.

The two sidewalls in the box 10 that are adjacent to the top surface h and face away from each other include two sidewalls facing away from each other in the first direction F1 and two sidewalls facing away from each other in the second direction F2. In this case, the routing portions 13a4 can be arranged symmetrically relative to each other in the first direction F1 or in the second direction F2, and the harnesses can be routed from both sides of the box 10 in the first direction F1 or from both sides of the box 10 in the second direction F2. This allows for symmetrical arrangement of the harnesses, making arrangement of the harnesses more aesthetic and helping to balance the weight of the vehicle 1000.

Further, the routing portion 13a4 is provided on two sidewalls of the box 10 in the second direction F2, that is, on two sidewalls of the box 10 that correspond to the left and right directions of the vehicle 1000. Since various power drive systems (for providing power for the vehicle 1000 to move) on the vehicle 1000 are mainly arranged on the front or rear sides, the harnesses are connected to the battery 100 and the power drive systems mainly along the front and rear directions of the vehicle 1000. The routing portion 13a4 is so arranged as to facilitate routing of the harnesses.

In a specific embodiment, referring to FIG. 6 and FIG. 10, the routing portion 13a4 includes a routing groove k2 formed on the outer wall of the box 10 by recessing toward the accommodating cavity s.

Understandably, a routing space with one side open is formed by the routing groove k2 being recessed toward the accommodating cavity s, the open side being opposite the bottom of the routing groove k2. While the routing groove k2 is recessed toward the accommodating cavity s, it may also have a wire inlet and a wire outlet. Specifically, the wire inlet of the routing groove k2 may be an opening at one end in the extension direction of the routing groove k2, and the wire outlet of the routing groove k2 may be an opening at the other end in the extension direction of the routing groove k2.

When the routing groove k2 is located on the sidewall of the box 10 in the second direction F2, the routing groove k2 may extend in the first direction F1. When the routing groove k2 is located on the sidewall of the box 10 in the first direction F1, the routing groove k2 may extend in the second direction F2.

In this case, the routing groove k2 has an open side. The arrangement of the open side better facilitates the routing of harnesses. Moreover, the routing groove k2 formed by recessing is constructed as the routing portion 13a4, eliminating the need for adding other structures to create a routing space. This simplifies the structure of the box 10 and reduces costs.

Certainly, in other embodiments, the routing portion 13a4 may alternatively be a structure having a routing hole and provided on the outer wall of the box 10, such as a routing rod with routing holes.

In some embodiments, referring to FIG. 6 and FIG. 10, the lateral beam 13 is constructed as the routing portion 13a4.

Specifically, when the routing portion 13a4 is the routing groove k2, the lateral beam 13 may include the upper arm beam 131 and the lower arm beam 132 in the above embodiment, and a space between the upper arm beam 131 and the lower arm beam 132 is the space where the routing groove k2 is located. Alternatively, the outer surface of the lateral beam 13 away from the main body 11 is recessed to form the routing groove k2.

When the routing portion 13a4 is a routing hole, and the lateral beam 13 is a hollow beam with both ends open along its extension direction, the internal space of the lateral beam 13 may be constructed as a routing hole. Alternatively, the lateral beam 13 includes the upper arm beam 131, a lower arm beam 132, and the intermediate beam (not shown in the figure) in the above embodiment, the intermediate beam, the upper arm beam 131, and the lower arm beam together enclose a routing hole.

In this case, the routing portion 13a4 is formed in the lateral beam 13, which means that the lateral beam 13 has a routing space. The routing space can reduce the weight of the lateral beam 13 while achieving wire routing, achieving two benefits at once.

In a specific embodiment, the upper arm beam 131 and the lower arm beam 132 together form the routing portion 13a4 having a routing space. In this case, the routing space is formed by the space between the upper arm beam 131 and the lower arm beam 132, and the routing portion 13a4 is simple in structure and achieves two benefits at once.

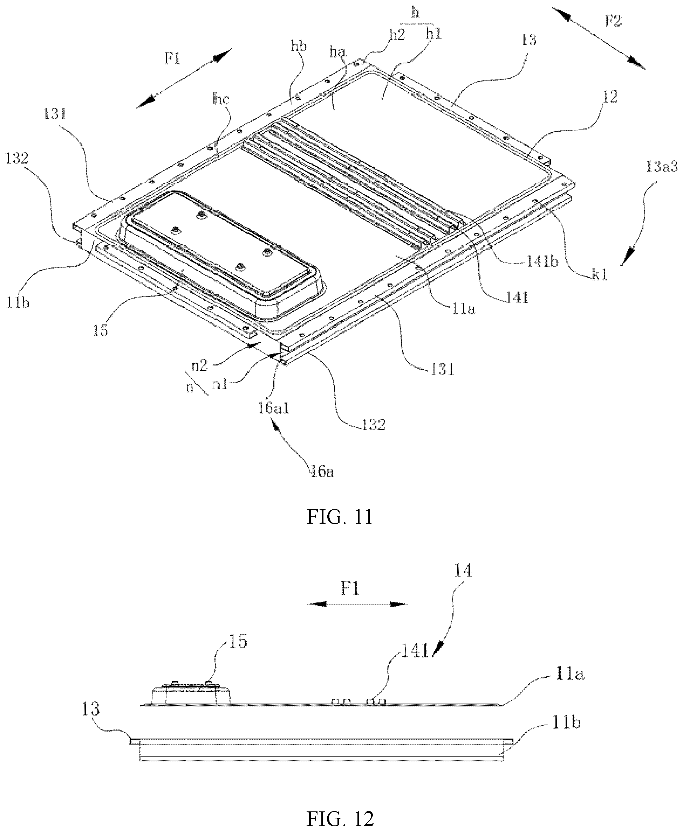

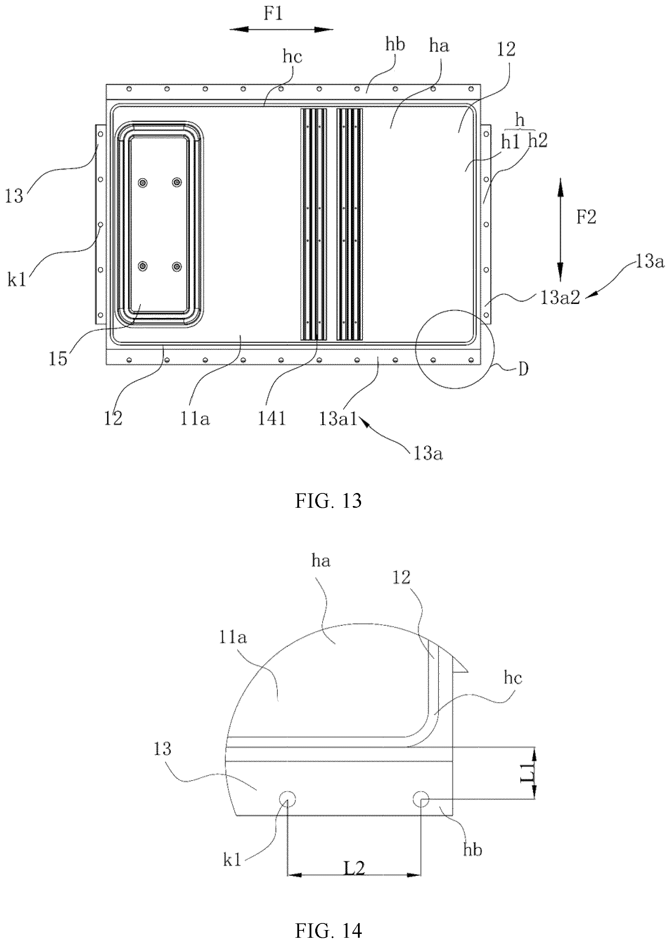

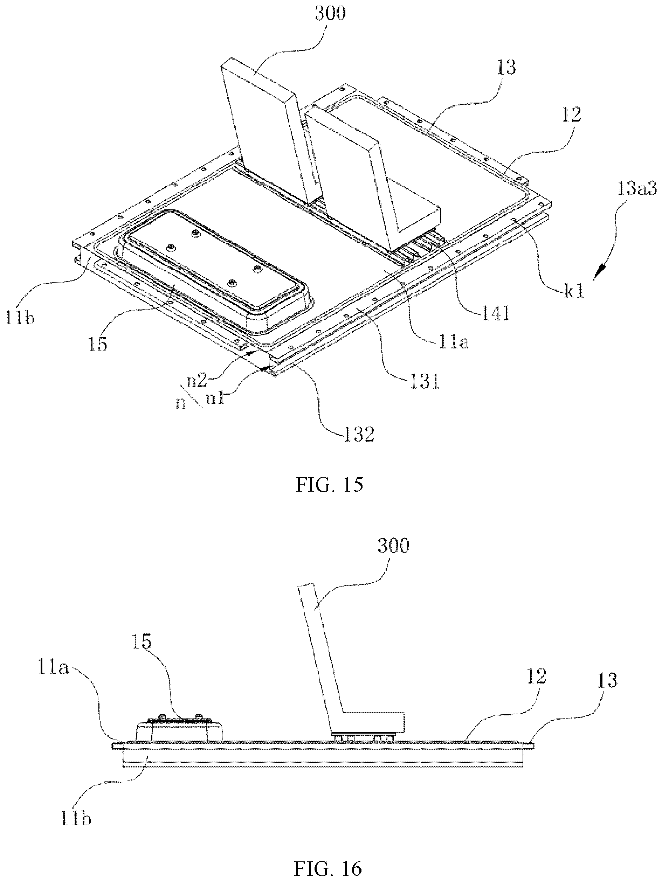

FIG. 11 is a schematic diagram of a partial structure of a battery 100 according to some other embodiments of this application, FIG. 12 is an exploded view of a side view of the structure shown in FIG. 11, FIG. 13 is a side view of the structure shown in FIG. 11, and FIG. 14 is an enlarged view of the structure at position D shown in FIG. 12. FIG. 15 is a schematic diagram of an application scenario of the structure shown in FIG. 11, and FIG. 16 is a side view of the structure shown in FIG. 14.

In some embodiments, referring to FIG. 11, the box 10 further includes a sealing member 12, where the sealing member 12 is disposed on the top of the box 10 and configured to be sealedly connected to an external apparatus.

The sealing member 12 is a component capable of preventing leakage of fluid, solid particles, or the like from between adjacent bonding surfaces. The sealing member 12 is disposed on the top of the box 10 and divides the top of the box 10 into an external region located outside the sealing member 12 and an internal region enclosed by the sealing member 12. The sealing member 12 is sealedly connected between the top of the box 10 and two surfaces opposite the external apparatus, and forms a contact interface with the two surfaces. This can prevent fluids, solid particles, or the like in the external region outside the sealing member 12 from entering the internal region enclosed by the sealing member 12 through the contact interface between the sealing member 12 and the two surfaces, thus achieving a sealing effect.

The sealing member 12 is optionally a sealing ring or a gasket. Specifically, the sealing member 12 is optionally made of a material such as rubber or silicone. Specifically, the sealing member 12 is optionally an O-shaped sealing member, a square sealing member, a special-shaped sealing member, or the like. The specific shape of the sealing member 12 may match the shape of the top of the box 10 and the two opposite surfaces of the external apparatus. For example, the sealing member 12 may be a square sealing member when the top of the box 10 and the two opposite surfaces of the external apparatus are square surfaces.

In this case, the box 10 of the battery 100 is sealedly connected to the external apparatus through the sealing member 12, achieving reliable sealing with low costs.

Understandably, while the box 10 of the battery 100 is sealed with the external apparatus through the sealing member 12, it is also fixedly connected to the external apparatus through the mounting portion 13a3, and in this case, the top surface h of the box 10 is in contact with the external apparatus.

Taking the external apparatus being the body 200 of the vehicle 1000 as an example, the battery 100 may be mounted on the bottom of the body 200, and sealedly connected to the body 200 through the sealing member 12 on a sealing region hc. In this case, the internal region of the sealing member 12 is inside the body 200, and the external region is outside the body 200, and the fluids, solid particles, or the like outside the body 200 cannot leak to the inside of the body 200. For example, stones or liquids splashed during the operation of the vehicle 1000 cannot hit the inside of the body 200, thus achieving the sealing and structural reliability of the inside of the body 200.

In some embodiments, referring to FIG. 7 and FIG. 11, an installation position 141b is constructed on a side of the top of the box 10 that faces away from the accommodating cavity s. The battery 100 is mounted to the external apparatus via the top of the box 10 and the installation position 141b forms part of the structure of the external apparatus.

The installation position 141b is an installation region constructed in a partial region on the top of the box 10 for installing a specified structure (hereinafter referred to as an installation object). The installation object may be a part of the structure of the external apparatus, and the installation position 141b may be a structure having a connecting function, such as an installation clip or an installation hole. Taking the external apparatus being the body 200 of the vehicle 1000, the installation position 141b may be used for installing a structure such as a seat 300 or a control lever of the vehicle 1000, and the structure such as the seat 300 or the control lever is fixedly connected to the installation position 141b on the top of the box 10 through a structure such as an installation clip or an installation hole.

Specifically, the installation object installed on the installation position 141b may be a partial structure of the external apparatus, and the installation position 141b for installing the partial structure of the external apparatus also forms a part of the structure of the external apparatus after the top of the box 10 is connected to the external apparatus. In this case, the battery 100 is installed on the external apparatus via the top of the box 10, and after the installation position 141b on the top of the battery 100 forms a part of the structure of the external apparatus, the installation object is connected to the box 10 of the battery 100, thus achieving the connection with the external apparatus.

In this way, the battery 100 and a partial structure of the external apparatus are integrally provided, so that the partial structure of the box 10 of the battery 100 becomes a partial structure of the external apparatus, thus avoiding the need for separate arrangement of the battery 100 and the external apparatus.

In other embodiments, the installation object installed on the installation position 141b may alternatively be a structure other than the external apparatus, and the installation object is installed on the installation position 141b to achieve fixed connection with both the battery 100 and the external apparatus.

In a specific embodiment, as shown in FIG. 14 and FIG. 15, assuming that the external apparatus is the body 200 of the vehicle 1000 and the installation position 141b is used for installing the seat 300, the installation position 141b is constructed on the top of the box 10 of the battery 100, so that the installation position 141b forms an internal structure of the body 200, integrating the battery 100 and the body 200 to avoid separate arrangement of the battery 100 and the body 200, and making the structure of the vehicle 1000 simpler, smaller, and more compact.

Understandably, the fixed connection of the box 10, the body 200, and the seat 300 ensures that all structures are connected to the top of the box 10 in a vertical direction, reduces the installation space and installation stress in other directions of the box 10, and reduces the stress on the lateral structure and bottom structure of the box 10 of the battery 100, thus improving the structural stability of the vehicle 1000.

In some embodiments, referring to FIG. 7, the installation position 141b includes an installation hole constructed on the top of the box 10.

The installation hole is a through-hole extending through the installation position 141b in the vertical direction. For installing the seat 300 or the like on the installation position 141b, fasteners need to be used, and the installation hole can be a smooth through-hole (for example, when the fastener is a rivet), a threaded through-hole (for example, when the fastener is a screw), or a through-hole of other types (for example, a hexagonal hole, a square hole, or a waist-shaped hole). The specific form of the fixing hole 11c3 depends on the specific form and specific arrangement method of the fastener, which is not detailed herein.

The number of installation holes is the same as the number of fasteners, and each installation hole is equipped with one fastener. The installation object is installed and positioned in the installation hole through the fastener, achieving fixation of the installation object to the box 10 of the battery 100 as well as a fixed connection between the installation object and the external apparatus.

In other embodiments, the installation position 141b may also include other structures constructed on the top of the box 10 such as a clip or an elastic lock. This is not specifically limited.

In some embodiments, referring to FIGs. 4 to 7 and FIG. 11, the box 10 includes a main body 11 and a mounting beam 141. The main body 11 encloses the accommodating cavity s, a top of the main body forming at least a portion of the top of the box 10. The mounting beam 141 is disposed on the top of the main body 11 and is constructed with an installation position 141b on a side facing away from the main body 11.

The main body 11 may be an integrally formed structure or may be assembled from multiple parts. The specific arrangement form has been explained in detail above and is not repeated herein.

The top of the box 10 has a top surface h on a side facing away from the accommodating cavity s, and the installation position 141b and the top surface h communicate with each other. The mounting beam 141 is a structure with a load-bearing capacity disposed on the top of the main body 11 for sharing the force exerted by the installation object on the top of the box 10. As shown in FIG. 15 and FIG. 16, when the installation object is the seat 300, the pressure exerted by an operator sitting on the seat 300 is applied first to the mounting beam 141 and then to the top of the box 10.

The mounting beam 141 may be provided directly on the top surface h or on a recessed or protruding portion constructed on the top surface h. One or more load-bearing structures on the mounting beam 141 are together constructed as the installation position 141b for securing the installation object on a side facing away from the top surface h, thus achieving a connection between the installation object and the top of the box 10.

The arrangement form and extension direction of the load-bearing structure are set according to the size, weight, and specific structure of the installation object to be installed on the installation position 141b, which is not specifically limited. The mounting beam 141 is used to share the force received on the top of the main body 11 to improve the load-bearing capacity of the box 10 of the battery 100.

In some embodiments, the mounting beam 141 is fixedly connected to or integrally formed with the main body 11.

The mounting beam 141 and the main body 11 may be fixedly connected by a fastener, a snap-fit structure, welding, bonding, hot-melt connection, or the like. Certainly, the mounting beam 141 and the main body 11 may be integrally formed by injection molding, die casting, forging, cold pressing, hot pressing, or the like.

When the main body 11 is made of metal (such as aluminum, iron, or stainless steel), the mounting beam 141 and the main body 11 may be integrally formed by die-casting, forging, hot pressing, cold pressing, or the like. When the main body 11 is made of plastic (such as PP, PE, or ABS), the mounting beam 141 and the main body 11 may be integrally formed by injection molding. The mounting beam 141 and the main body 11 may alternatively be separately formed and connected together. When the mounting beam 141 and the main body 11 are made of metal, the mounting beam 141 and the main body 11 may be welded or bonded together. When the mounting beam 141 and the main body 11 are made of plastic, the mounting beam 141 and the main body 11 may be bonded together.

When the mounting beam 141 and the main body 11 are fixedly connected, the formation processes of the mounting beam 141 and the main body 11 are simple, reducing the process cost of the box 10.

When the mounting beam 141 and the main body 11 are integrally formed, the box 10, the external apparatus, and the installation object are easy to assemble.

In other embodiments, the main body 11 is connected to a portion other than the mounting beam 141, and they may be integrally formed or fixedly connected, which is not specifically limited.

In some embodiments, referring to FIG. 7 and FIG. 11, the mounting beam 141 includes at least one convex portion 141a, each convex portion 141a protrudes from the top of the main body 11 in a direction leaving the accommodating cavity s, and each convex portion 141a and the main body 11 together form a weight reduction channel 141a1. The installation position 141b is constructed on a side of the convex portion 141a facing away from the main body 11.

The convex portion 141a, namely the load-bearing structure included on the mounting beam 141 described above, protrudes in a direction leaving the accommodating cavity s, relative to a plane where the top surface h of the box 10 is located. The convex portion 141a has a certain height, thus protruding from the top surface h of the box 10. The installation positions 141b are formed on a side where all the convex portions 141a facing away from the main body 11. In this case, when installed on the installation position 141b, the installation object is in direct contact with the convex portion 141a but is not in direct contact with the top surface h, thus dispersing the force on the top of the box 10 through the convex portion 141a and increasing the load-bearing capacity of the top of the box 10.

Each convex portion 141a may be formed as a structure with multiple surrounding sides and one open end, and the top surface h1 of the main body 11 covers the open end of each convex portion 141a and together with it, forms a weight reduction channel 141a1. The weight reduction channel 141a1 may be formed by hollowing out the interior of the convex portion 141a, by punching holes or grooves, or the like, to achieve lightweight design of the box 10.

In a specific embodiment, each convex portion 141a has a weight reduction channel 141a1 running through the interior of the convex portion 141a along its extension direction. The provision of the weight reduction channel 141a1 reduces the weight of each convex portion 141a, which in turn reduces the overall weight of the box 10 and reduces the costs. Each weight reduction channel 141a1 that runs through the interior may form a hidden channel. In other embodiments, the hidden channel may also be used for operations such as hidden wiring.

In some embodiments, referring to FIG. 6 and FIG. 7, all convex portions 141a extend in a same direction and are spaced apart from each other.

The "same direction" may be the first direction F1 or the second direction F2 mentioned above, or a direction that is coplanar and intersects with the first direction F1 and the second direction F2, which is not specifically limited.

All convex portion 141a being spaced apart from each other means that a specified spacing is maintained between every two adjacent convex portions 141a in a direction intersecting with the extension direction of the convex portions 141a. The specified spacing creates a buffer space between every two adjacent convex portions 141a, preventing the external forces acting on the mounting beam 141 from being transmitted to the box 10 and damaging the battery 100. Moreover, multiple spaced convex portions 141a can form a sufficiently large support area and fixing position to realize a large area to provide extensive support for the installation object, suitable for installing installation objects of different volumes and sizes.

All convex portions 141a are provided in parallel in a same direction, so that the buffer space extends in a same direction as the convex portions 141a. In practical applications, buffering can be achieved at any position in the extension direction of the mounting beam 141.

The specified spacing distance between every two adjacent convex portions 141a may be equal or unequal. Understandably, to ensure uniform support for the installation object, the specified spacing distance between every two adjacent convex portions 141a is equal.

In some embodiments, sides of all the convex portions 141a that face away from the main body 11 are located on a same plane.

All the convex portions 141a are arranged to protrude in a same direction, and the protrusion heights of all the convex portions 141a are the same, so that the sides of all the convex portions 141a facing away from the installation cavity form a flat plane in a specified direction, such as forming a flat plane on a horizontal plane. The installation object is placed on the flat plane, allowing for smoother and simpler installation and ensuring a secure connection between the installation object and the mounting beam 141.

In a specific embodiment, the convex portion 141a may be a four-sided prismatic structure, and the same sides of all the convex portions 141a are located on a same plane and together define an installation position 141b for installing the installation object, allowing the installation object to be smoothly placed on the mounting beam 141.

In some embodiments, referring to FIG. 4, FIG. 7, and FIG. 11, the box 10 further includes a side-impact reinforcing beam 14, the side-impact reinforcing beam 14 is provided on the top of the main body 11 and extends from the middle of the top of the main body 11 to outer edges of two opposite sides of the top of the main body 11.

The side-impact reinforcing beam 14 is a beam structure provided on the top of the main body 11 to enhance the strength of the main body 11. Understandably, the side-impact reinforcing beam 14 is disposed outside the main body 11. Specifically, the main body 11 and the side-impact reinforcing beam 14 are integrally connected as a whole, or may be connected as a whole by assembly. The integral connection includes but is not limited to welding, integral formation, fusion bonding, and the like. The assembly connection includes but is not limited to snap-fit, threaded connection, and the like.

The side-impact reinforcing beams 14 may be provided from the middle part of the top of the main body 11 towards the outer edges of two opposite sides of the top of the main body 11 in the first direction F1. In this case, the side-impact reinforcing beam 14 can strengthen the side-impact resistance of the box 10 in the first direction F1. The side-impact reinforcing beams 14 may alternatively be provided from the middle part of the top of the main body 11 towards the outer edges of two opposite sides of the top of the main body 11 in the second direction F2. In this case, the side-impact reinforcing beam 14 can strengthen the side-impact resistance of the box 10 in the second direction F2.

The side-impact reinforcing beam 14 may extend from the middle part of the top of the main body 11 towards the outer edges of the two opposite sides of the top of the main body 11 in two co-linear directions, respectively, or may extend from the middle of the top of the main body 11 towards the outer edges of the two opposite sides of the top of the main body 11 in two intersecting directions. When the side-impact reinforcing beam 14 extends from the middle part of the top of the main body 11 towards the outer edges of the two opposite sides in the two co-linear directions, the side-impact reinforcing beam 14 is achieved through a straight beam, making the structure simpler.

The side-impact reinforcing beam 14 may extend to the outer edges of the two sides, or to the area between the outer edges of the two sides and the middle part, or to a region between the outer edges of the two sides and the middle part. In other words, a specific extension length of the side-impact reinforcing beam 14 is not limited, as long as it extends from the middle part of the top of the main body 11 towards the outer edges of the two opposite sides of the top of the main body 11.

When the battery 100 is applied to the vehicle 1000, and the top of the box 10 is constructed as the chassis of the vehicle 1000, since the vehicle 1000 has poor side-impact resistance in the left-right direction, the side-impact reinforcing beam 14 may be designed to extend from the middle part of the top of the main body 11 towards the outer edges of two sides of the top of the main body 11 in the left-right direction of the vehicle 1000 to enhance the side-impact resistance in the left-right direction of the vehicle 1000, thus improving the safety performance of the vehicle 1000.

In this case, the provision of the side-impact reinforcing beam 14 on the top of the main body 11 of the box 10 can improve the side-impact resistance of the box 10, which in turn improves the side-impact resistance of the vehicle 1000 loaded with the battery 100 including the box 10, thus helping to ensure the safety performance of the battery 100 and the vehicle 1000.

When the main body 11 includes the frame 11b and the bearing member 11a, the side-impact reinforcing beam 14 is provided at least on the top of the bearing member 11a. In this case, since the top of the bearing member 11a forms at least a portion of the top of the main body 11, the bearing member 11a has sufficient space for installing the side-impact reinforcing beam 14.

In some embodiments, the side-impact reinforcing beam 14 extends to be connected to the top of the frame 11b.

In this case, the top of the frame 11b also forms a portion of the top of the main body 11, and the side-impact reinforcing beams 14 can also extend to be connected to the top of the frame 11b. The frame 11b and the bearing member 11a are connected together directly, and the connection between them can also be reinforced by the side-impact reinforcing beam 14, thus enhancing the reliability of the connection between the frame 11b and the bearing member 11a.

In some embodiments, the number of side-impact reinforcing beams 14 is at least one, and all the side-impact reinforcing beams 14 extend in a same direction and are spaced apart from each other.

The "same direction" may be the first direction F1 or the second direction F2 mentioned above, or a direction that is coplanar and intersects with the first direction F1 and the second direction F2, which is not specifically limited.

All side-impact reinforcing beams 14 extend in the same direction, and each side-impact reinforcing beam 14 is capable of reinforcing the side-impact resistance of the box 10 in the extension direction, thus enhancing the side-impact resistance of the box 10 in that extension direction. Understandably, the side-impact reinforcing beams 14 are spaced apart in a direction intersecting with that "same direction", so that the strength of the box 10 can be strengthened at multiple locations, resulting in more uniform structural strength and side-impact resistance of the box 10.

In some embodiments, at least one of the side-impact reinforcing beams 14 is constructed as a mounting beam 141, and the installation position 141b is constructed on a side of the mounting beam 141 facing away from the main body 11.

For details about the mounting beam 141 and the installation position 141b, refer to the above description, which is not repeated herein. When there is one side-impact reinforcing beam 14, the side-impact reinforcing beam 14 is used as the mounting beam 141. When there are at least two side-impact reinforcing beams 14, some of the side-impact reinforcing beams 14 may be used as the mounting beams 141. Specifically, when there are at least two side-impact reinforcing beams 14, the side-impact reinforcing beam 14 near the front of the vehicle 1000 may be used as the mounting beams 141 for mounting the seat 300 (the seat 300 may be the seat 300 in the driver's cabin).

In this case, using at least one of the side-impact reinforcing beams 14 as the mounting beam 141 not only provides side-impact protection, but also allows for mounting of other installation objects, serving two purposes in one.

In some embodiments, the side-impact reinforcing beam 14 includes at least one convex portion 141a, each convex portion 141a protrudes from the top of the main body 11 in a direction leaving the accommodating cavity s, and each convex portion 141a and the main body 11 together form a weight reduction channel 141a1.

The convex portion 141a of the side-impact reinforcing beam 14 has the same structure as the convex portion 141a mentioned in the above embodiment when describing the structure of the mounting beam 141. For details, refer to the above description. The convex portion 141a protrudes in a direction leaving the accommodating cavity s, relative to a plane where the top surface h1 of the main body 11 is located. The convex portion 141a has a certain height, thus protruding from the top surface h1 of the main body 11.

Each convex portion 141a may be formed as a structure with multiple surrounding sides and one open end, and the top surface h1 of the main body 11 covers the open end of each convex portion 141a and together with it, forms a weight reduction channel 141a1. The weight reduction channel 141a1 may be formed by hollowing out the interior of the convex portion 141a, by punching holes or grooves, or the like, to achieve lightweight design of the box 10.

In a specific embodiment, each convex portion 141a has a weight reduction channel 141a1 running through the interior of the convex portion 141a along its extension direction. The provision of the weight reduction channel 141a1 reduces the weight of each convex portion 141a, which in turn reduces the overall weight of the box 10 and reduces the costs. Each weight reduction channel 141a1 that runs through the interior may form a hidden channel. In other embodiments, the hidden channel may also be used for operations such as hidden wiring.

In some embodiments, referring to FIG. 7, all convex portions 141a extend in a same direction and are spaced apart from each other.

All convex portion 141a being spaced apart from each other means that a specified spacing is maintained between every two adjacent convex portions 141a in a direction intersecting with the extension direction of the convex portions 141a. The specified spacing creates a buffer space between every two adjacent convex portions 141a, preventing the external forces acting on the mounting beam 141 from being transmitted to the box 10 and damaging the battery 100. Moreover, multiple spaced convex portions 141a can form a sufficiently large support area and fixing position to realize a large area to provide extensive support for the installation object, suitable for installing installation objects of different volumes and sizes.

All convex portions 141a are provided in parallel in a same direction, so that the buffer space extends in a same direction as the convex portions 141a. In practical applications, buffering can be achieved at any position in the extension direction of the side-impact reinforcing beam 14.

The specified spacing distance between every two adjacent convex portions 141a may be equal or unequal. Understandably, when the side-impact reinforcing beam 14 is used as the mounting beam 141, to ensure uniform support for the installation object, the specified spacing distance between every two adjacent convex portions 141a is equal.

In some embodiments, sides of all the convex portions 141a that face away from the main body 11 are located on a same plane.

Each convex portion 141a has one side located on the top surface h1 of the main body 11, all the convex portions are arranged to protrude in a same direction, and the protrusion heights of all the convex portions 141a are the same, so that the sides of all the convex portions 141a facing away from the installation cavity form a flat plane in a specified direction, such as forming a flat plane on a horizontal plane, thus ensuring a secure connection between the installation object and the mounting beam 141.

In a specific embodiment, the convex portion 141a may be a four-sided prismatic structure, and the same sides of all the convex portions 141a are located on a same plane and together define an installation position 141b for installing the installation object, allowing the installation object to be smoothly placed on the mounting beam 141.

In some embodiments, referring to FIG. 10, the box 10 is formed with a battery chamber s1 and a high-voltage chamber s2 independent of each other, where the battery chamber s1 is configured to accommodate the battery cell 20, and the high-voltage chamber s2 is configured to accommodate a high-voltage box.

The high-voltage box is an important safety barrier for a battery pack 100. It houses a high-voltage control system, and is mainly used for: connecting or disconnecting the high-voltage circuit according to the electronic control requirements of the vehicle; providing current and leakage detection terminals; implementing controllable on-load cut-off when the external current of the battery pack 100 is excessively large; disconnecting the high-voltage circuit when the external line of the battery pack 100 is short-circuited, to prevent the battery pack 100 from catching fire; and facilitating disconnection of the high-voltage circuit during maintenance of the battery pack 100.

The battery chamber s1 and the high-voltage chamber s2 being independent of each other means that the battery chamber s1 and the high-voltage chamber s2 are sealed off from each other. To achieve the separate arrangement of the battery chamber s1 and the high-voltage chamber s2, the battery chamber s1 and the high-voltage chamber s2 may be formed by two independent components respectively. For example, a separate first component and a separate second component are provided inside the box 10, the first component forming the battery chamber s1 and the second component forming the high-voltage chamber s2. Alternatively, a partition is provided inside the box 10 to separate the accommodating chamber s formed in the box 10 into the separate battery chamber s1 and high-voltage chamber s2. Alternatively, the entire accommodating cavity s formed inside the box 10 is used as the battery chamber s1, and a high-voltage compartment 15 is constructed outside the box 10 to form the high-voltage chamber s2, so as to achieve the separate arrangement of the battery chamber s1 and high-voltage chamber s2.

The battery chamber s1 is configured to accommodate the battery cell 20, and the high-voltage chamber s2 is configured to accommodate the high-voltage box. When the battery chamber s1 and the high-voltage chamber s2 are independent of each other, high temperature gases leaked due to thermal failure of the battery cell 20 in the battery chamber s1 will not enter the high-voltage box. This prevents thermal damage to the high-voltage control system in the high-voltage box, ensuring the normal control function of the high-voltage control system and improving the safety performance of the battery 100.

In some embodiments, referring to FIG. 11 to FIG. 13, the box 10 further includes a high-voltage compartment 15, a battery chamber s1 is formed inside the main body 11, the high-voltage compartment 15 is disposed outside the main body 11 and encloses a high-voltage chamber s2 by itself or together with the main body 11.

The high-voltage compartment 15 may be a housing 22 structure, which is hollow inside to form the high-voltage compartment 15 for accommodating a high-voltage box. The high-voltage compartment 15 is provided outside the main body 11, and the battery chamber s1 is formed by the main body 11 (in this case, the battery chamber s1 is equivalent to the accommodating cavity s), so as to achieve the separate arrangement of the high-voltage chamber s2 and the battery chamber s1.

When the high-voltage compartment 15 and the main body 11 together form the high-voltage chamber s2, the high-voltage compartment 15 has an opening and is mounted to the main body 11 via the opening. When the high-voltage compartment 15 encloses the high-voltage chamber s2 by itself, it has only an installation relationship with the main body 11.

In this case, the high-voltage compartment 15 disposed outside the main body 11 defines the high-voltage chamber s2, and the accommodating cavity s formed by the main body 11 can be used as the battery chamber s1 for accommodating the battery cell 20, thus increasing electric capacity of the battery 100.

In some embodiments, referring to FIG. 11 and FIG. 12, the high-voltage compartment 15 is protrudingly provided on the top of the main body 11.

The high-voltage compartment 15 is protrudingly provided on the top of the main body 11, that is, the high-voltage compartment 15 is located outside the main body 11 and on the top surface h1 of the main body 11. When the box 10 of the battery 100 is used as the chassis of the vehicle 1000, the high-voltage compartment 15 is safer because the high-voltage compartment 15 is located on the top of the main body 11 and thus is not exposed outside the vehicle 1000 and can be protected from external impacts (such as stones splashing during operation of the vehicle 1000).

Understandably, when the main body 11 includes the frame 11b and bearing member 11a described above, the bearing member 11a forms at least a portion of the top of the main body 11, and the high-voltage compartment 15 is disposed on the top of the bearing member 11a and encloses the high-voltage chamber s2 by itself or together with the bearing member 11a. In this case, since the bearing member 11a constitutes a large portion of the top of the main body 11, providing the high-voltage compartment 15 on the top of the bearing member 11a provides a larger installation space for more stable installation of the high-voltage compartment 15.

Certainly, when the top of the frame 11b is also constructed as a portion of the top of the main body 11, the high-voltage compartment 15 may alternatively be provided on the top of the frame 11b, which may be specifically determined according to the installation methods of the frame 11b and the bearing member 11a.

In some embodiments, referring to FIG. 11 to FIG. 13, the high-voltage compartment 15 is provided near the top outer edge of the main body 11.

The top outer edge of the main body 11 includes: a side outer edge of the top of the main body 11 in the forward direction of the vehicle 1000, a side outer edge of the top of the main body 11 in the rearward direction of the vehicle 1000, a side outer edge of the top of the main body 11 in the left direction of the vehicle 1000, and a side outer edge of the top of the main body 11 in the right direction of the vehicle 1000.

In an application example, the high-voltage compartment 15 is provided near the side outer edge of the top of the main body 11 in the rearward direction of the vehicle 1000, that is, the high-voltage compartment 15 is arranged near the rear of the vehicle 1000. In this case, the high-voltage compartment 15 can be arranged corresponding to the passenger space behind the driver's space of the vehicle 1000, and particularly, arranged beneath the seat 300 in the passenger space, without taking up the usable space of the vehicle 1000.

In some embodiments, referring to FIGs. 4, 6, and 11 to 13, the high-voltage compartment 15 and the side-impact reinforcing beam 14 are sequentially arranged in the first direction F1, and the side-impact reinforcing beam 14 extends in the second direction F2 intersecting with the first direction F1.

When the box 10 includes the side-impact reinforcing beam 14, both the high-voltage compartment 15 and the side-impact reinforcing beam 14 can be disposed on the top of the main body 11.

The high-voltage compartment 15 and the side-impact reinforcing beam 14 being sequentially arranged in the first direction F1 means that the high-voltage compartment 15 is disposed on one side of all the side-impact reinforcing beams 14 in the first direction F1. The side-impact reinforcing beams 14 extend along the second direction F2 intersecting with the first direction F1, without interfering with the high-voltage compartment 15. The structural arrangement of the high-voltage compartment 15 and the side-impact reinforcing beams 14 is reasonable, and the utilization of the top space of the main body 11 is relatively high.

In a specific embodiment, referring to FIG. 4, the high-voltage compartment 15 includes a compartment cover 15a and a compartment box 15b, the compartment box 15b is disposed on the top of the main body 11 and forms a high-voltage chamber s2 that is open on a side facing away from the main body 11, and the compartment cover 15a is detachably engaged with the open side of the high-voltage chamber s2.

The compartment box 15b may be connected to the main body 11 by welding, fusion, bonding, fastening connection, or the like. Without limitation, the compartment box 15b may be made from plastic. The compartment cover 15a and the compartment box 15b may be detachably connected by fasteners, or may be detachably connected by snap-fit. A specific form is not limited.

In this case, the high-voltage chamber s2 is formed by the compartment box 15b, the compartment cover 15a seals the high-voltage chamber s2, and the compartment cover 15a and the compartment box 15b are detachably connected, facilitating installation and maintenance of the high-voltage box.

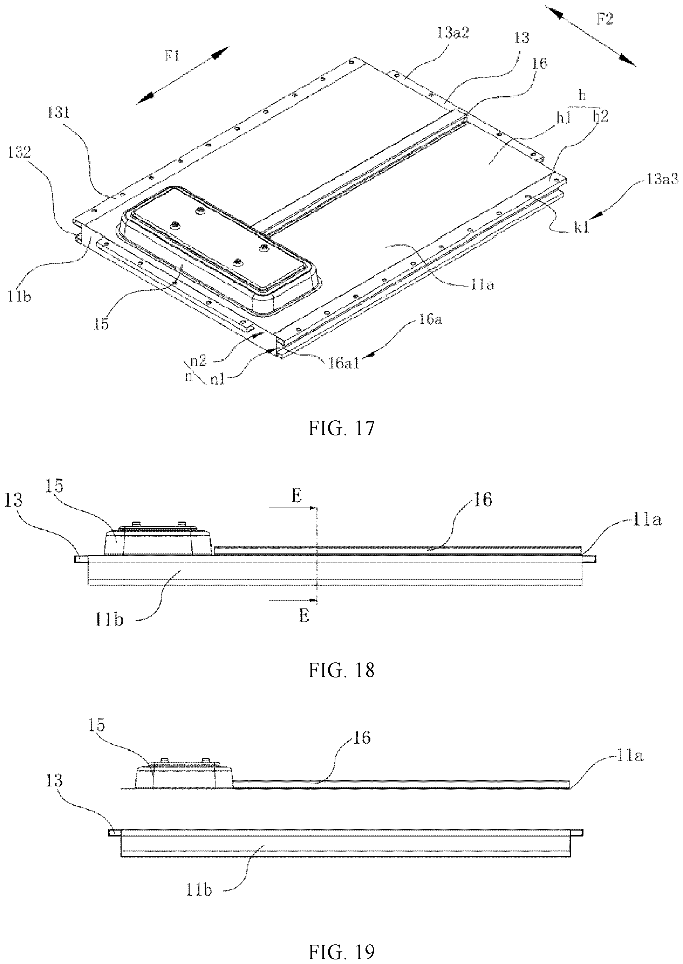

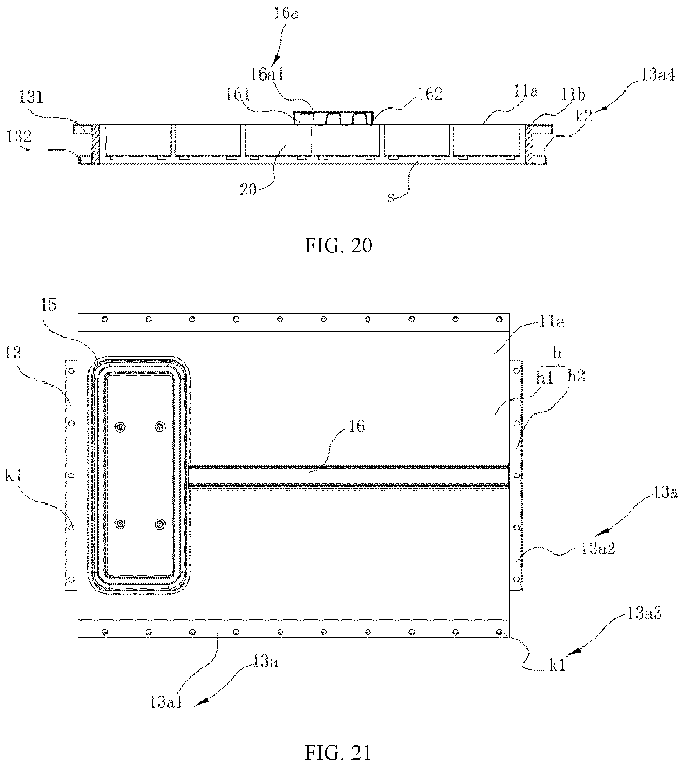

FIG. 17 is a schematic diagram of a partial structure of a battery 100 according to some other embodiments of this application, FIG. 18 is a side view of the structure shown in FIG. 17, FIG. 19 is an exploded view of the structure shown in FIG. 18, and FIG. 20 is a cross-sectional view of the structure along E-E shown in FIG. 18. FIG. 21 is a top view of the structure shown in FIG. 17.

In some embodiments, referring to FIG. 17 to FIG. 21, the box 10 further includes a center channel beam 16, the center channel beam 16 is provided on the top of the main body 11, extending along the first direction F1, and is provided equidistant from the two side outer edges of the top of the main body 11 in the second direction F2 intersecting with the first direction F1, and the center channel beam 16 has a routing channel 16a for harness routing.

In a conventional vehicle 1000, the center channel beam 16 is typically provided on a chassis of the body 200 of the vehicle 1000. The center channel beam 16 is a beam structure extending from the front chassis to the rear chassis on the body 200 of the vehicle 1000, serving as a major structural component for transmitting collision forces of the body 200 and ensuring the stiffness of the floor of the body 200. The center channel beam 16 is arranged in the middle region of the chassis of the vehicle 1000 and extends from the front chassis to the rear chassis along the front-rear direction of the vehicle 1000.

In this embodiment, the center channel beam 16 of the vehicle 1000 is directly integrated on top of the main body 11 of the box 10. Specifically, the center channel beam 16 extends along the first direction F1 (corresponding to the front-rear direction of the body 200), and is provided equidistant from two side outer edges of the top of the main body 11 in the second direction F2 (corresponding to the left-right direction of the body 200), making it in the middle region of the top of the main body 11.

Typically, to reduce the weight of the body 200 and achieve lightweight design of the body 200, the center channel beam 16 is designed as a hollow structure. In this embodiment, the hollow structure provided inside the center channel beam 16 is utilized to form the routing channel 16a for harness routing. This not only reduces the weight, but also achieves flexible and safe arrangement of harnesses.

The center channel beam 16 may be a sheet metal component integrally formed by stamping, die-casting, or the like, or a beam structure formed by welding, fusing, or fastening multiple sheet metal plates together, as long as a routing channel 16a for harness routing can be formed. The routing channel 16a may be located inside the center channel beam 16 (for example, a pore channel inside the center channel beam 16) or outside the center channel beam 16 (for example, a recess channel recessed outside the center channel beam 16). The center channel beam 16 may form a routing channel 16a with the main body 11 or may enclose a routing channel 16a by itself. The center channel beam 16 and the main body 11 may be connected as a whole by welding, fusion welding, fastening connection, or the like.

The routing channel 16a possessed by the center channel beam 16 may extend along the extension direction of the center channel beam 16 (that is, the first direction F1), or it may be designed in accordance with other needs. This is not specifically limited, as long as routing can be achieved. The center channel beam 16 may be provided with multiple independent routing channels 16a to implement wiring of various types of harnesses for easy installation and maintenance.

In this case, when the top of the box 10 is constructed as the chassis of the body 200 of the vehicle 1000 (the chassis is the floor of the body 200), there is no need to additionally set up the center channel beam 16, resulting in more efficient assembly of the body 200. In addition, the hollow structure formed inside the center channel beam 16 is utilized to form the routing channel 16a for harness routing. This not only reduces the weight, but also achieves flexible arrangement of harnesses.

In some embodiments, referring to FIG. 20, the center channel beam 16 includes a beam seat 161, the beam seat 161 is provided on the top of the main body 11 and is formed with a wiring groove 16a1 as the routing channel 16a, and the wiring groove 16a1 is recessed towards the accommodating cavity s.

The beam seat 161 is directly provided on the main body 11, and may be fastened to the main body 11 by welding, fusion welding, fastening connection, or the like. The beam seat 161 is formed with a wiring groove 16a1, the wiring groove 16a1 is recessed towards the accommodating cavity s, that is, the wiring groove 16a1 has a groove opening facing away from the accommodating cavity s, through which harnesses can be routed conveniently.

The wiring groove 16a1 may be a continuous groove structure formed by recessing on a side surface of the beam seat 161 facing away from the accommodating cavity s, or it may be multiple wiring portions constructed on a side surface of the beam seat 161 facing away from the accommodating cavity s and having grooves recessed towards the accommodating cavity s. The wiring portions are spaced apart in a specified direction, and the grooves of all the wiring portions together form the wiring groove 16a1 of the beam seat 161.

In this case, the wiring groove 16a1 recessed towards the accommodating cavity s is formed by the beam seat 161, facilitating installation of harnesses.

In some embodiments, referring to FIG. 20, multiple wiring grooves 16a1 are provided, and all the wiring grooves 16a1 extend in a same direction and are spaced apart from each other.

Multiple wiring grooves 16a1 are provided, and the multiple wiring grooves 16a1 may extend in a same direction (for example, the first direction F1) and be spaced apart. Each wiring groove 16a1 can be used for routing of a category of harnesses (harnesses can be classified based on the different objects they connect, such as harnesses connected to the air conditioning system, headlights, power drive system, or the like).

In this way, separate arrangement of different categories of harnesses can be achieved, making harness installation and maintenance more convenient.

In some embodiments, the wiring groove 16a1 is configured to clamp a harness routed through it.

To enable the wiring groove 16a1 to clamp the harness, specifically, the opening size of the wiring groove 16a1 may be approximately equal to or slightly larger than the diameter of the harness routed through it, thus achieving a snap fit. Alternatively, it may specifically be that a clamping component can be designed at the opening of the wiring groove 16a1, where one end of the clamping component is rotatably connected to one side of the opening of the wiring groove 16a1, and the other end is detachably clamped to the other side of the opening of the wiring groove 16a1. After the harness is arranged in the wiring groove 16a1, the harness is clamped in the wiring groove 16a1 by using the clamping component to engage with the opening of the wiring groove 16a1.

This can avoid noise caused by wobbling of the harness, and can also avoid damage to the harness caused by detachment of the harness from the wiring groove 16a1.

In some embodiments, referring to FIG. 20, the center channel beam 16 further includes a beam cover 162, the beam cover 162 being detachably engaged with the open side of the wiring groove 16a1.

The open side of the wiring groove 16a1 is a side on which the opening of the wiring groove 16a1 is located. The beam cover 162 being detachably engaged with the open side of the wiring groove 16a1 means that the beam cover 162 is detachably connected to the beam seat 161. Specifically, the beam cover 162 may be detachably clamped to the beam seat 161, or the beam cover 162 may be detachably connected to the beam seat 161 through fasteners (such as bolts). The specific method of achieving the detachable connection between the beam cover 162 and the beam seat 161 can be implemented using conventional techniques in the field, and is not limited or described herein.

In this case, covering the opening of the wiring groove 16a1 with the beam cover 162 can prevent external dust and moisture from entering the wiring groove 16a1 to corrode harnesses, and can also protect the harnesses from external forces and compression, thus enhancing the safety of the battery 100.

In some embodiments, the high-voltage chamber s2 communicates with the routing channel 16a.

Understandably, the harness is usually routed from the high-voltage box in the high-voltage chamber s2 to supply power to electric devices, and thus the harness passes through the high-voltage chamber s2 and the routing channel 16a.

The high-voltage chamber s2 communicating with the routing channel 16a means that the harness routed out from the high-voltage chamber s2 can enter the routing channel 16a. Specifically, the high-voltage chamber s2 has a wire outlet, and the wire outlet is positioned opposite the entrance of the routing channel 16a. In this case, there are no obstacles between the wire outlet and the entrance of the routing channel 16a, allowing the harness routed out through the wire outlet to enter the routing channels 16a directly via the entrance without bending. Alternatively, the high-voltage chamber s2 has a wire outlet, and the wire outlet is not directly opposite but spatially communicates with the entrance of the routing channel 16a. In this case, there are obstacles (which may be formed by the center channel beam 16 or other structures) between the wire outlet and the entrance of the routing channels 16a. The harness routed out from the wire outlet needs to be bent to bypass the obstacles before entering the routing channel 16a via the entrance of the routing channel 16a.

In this case, the high-voltage chamber s2 communicates with the routing channel 16a, allowing the harness routed out from the high-voltage chamber s2 to be arranged through the routing channel 16a.

In some embodiments, referring to FIG. 17 and FIG. 21, the center channel beam 16 and the high-voltage compartment 15 are arranged adj acent to each other along the first direction F1.

The center channel beam 16 typically extends from the front chassis of the body 200 to the rear chassis of the body 200, and the high-voltage compartment 15 is located on one side of the center channel beam 16 in the first direction F1, and the high-voltage compartment 15 may be arranged in front of or behind the center channel beam 16. Specifically, the high-voltage compartment 15 may be arranged behind the center channel beam 16, and the high-voltage compartment 15 corresponds to the position of the rear chassis of the body 200. Since the position of the rear chassis of the body 200 can be used for installing the seat 300 in the passenger compartment of the vehicle 1000, the high-voltage compartment 15 can be arranged by hiding the high-voltage compartment 15 in the space below the seat 300, allowing for higher spatial utilization of the passenger compartment of the vehicle 1000.

In some embodiments, referring to FIG. 11, a first region ha and a second region hb are formed on a top surface h of the box 10, the second region hb surrounds the first region ha, the second region hb is constructed with multiple mounting portions 13a3, and the battery 100 is mounted to the external apparatus via the mounting portions 13a3.

The formation of the first region ha and the second region hb may be achieved through other structural division, for example, by disposing the sealing member 12 on the top of the box 10 and dividing the top surface h of the box 10 into a second region hb located outside the sealing member 12 and a first region ha located inside the sealing member 12. The first region ha and the second region hb are independent of each other when the battery 100 is mounted to the external apparatus via the mounting portions 13a3.

The formation of the first region ha and the second region hb may alternatively be formed by automatic division on the top surface h, and in this case, there is no other structural separations between the first region ha and the second region hb. The first region ha and the second region hb can also communicate with each other when the battery 100 is mounted to the external apparatus via the mounting portion 13a3.

Moreover, the area of the first region ha and the area of the second region hb are not limited, and the first region ha and the second region hb may be flat surfaces or uneven surfaces. The specific construction is not limited.

In a specific embodiment, assuming that the external apparatus is the body 200 of the vehicle 1000, the mounting portions 13a3 are constructed in the second region hb, so that the box 10 is connected to the body 200 through the relatively outward region at the top. In this case, the box 10 is subjected to only the force of the body 200 in the vertical direction, reducing the force transmission paths, and helping to improve the stiffness and lateral compression resistance of the entire vehicle.

Understandably, the top surface h of the box 10 may include another region in addition to the first region ha and the second region hb, and the another region may be provided between, outside, or inside the first region ha and the second region hb, which is not specifically limited in this application.

In some embodiments, referring to FIG. 13 and FIG. 14, a distance L2 between geometric centers of orthographic projections of every two adjacent mounting portions 13a3 in the second region hb is 80 mm - 500 mm.

The orthographic projection is a projection of the parallel projection lines perpendicular to the projection plane. To be specific, the mounting portions 13a3 are projected onto the second region hb along a direction perpendicular to the second region hb. When the mounting portions 13a3 are connected to the external apparatus, each mounting portion 13a3 has a mounting force point, and the geometric center of the orthographic projection of each mounting portion 13a3 in the second region hb is the mounting force point. The distance (that is, the distance L2) between every two adjacent mounting force points is limited to 80-500 mm to ensure the uniform mounting of the battery 100 on the external apparatus and to enhance the connection strength between the battery 100 and the external apparatus.

In a specific embodiment, when the external apparatus is the body 200 of the vehicle 1000, the mounting portion 13a3 is designed to include multiple mounting holes k1, and the box 10 of the battery 100 is connected to the body 200 through the multiple mounting holes k1. A distance L2 between the geometric centers of the adjacent mounting holes k1 is within a specified range to ensure that the arrangement distance (that is, the distance L2) between mounting holes k1 is controllable. Through control of the arrangement distance between the mounting holes k1, it is ensured that the multiple mounting positions on the box 10 are basically uniformly distributed, resulting in even forces on the body 200 and improved connection rigidity between the body 200 and the box 10 at various positions.

Understandably, in some other embodiments, if personalized arrangement is required, for example, if there is a need to group the mounting portions 13a3 into a dense mounting region and a sparse mounting region, a distance (that is, the distance L2) between the mounting holes k1 within the dense mounting region can be set closer to 80 mm, while a distance (that is, the distance L2) between the mounting holes k1 within the sparse mounting region can be set closer to 500 mm, to meet the personalized requirements for localized dense and sparse mounting.

In some embodiments, referring to FIG. 13 and FIG. 14, the distance L2 between the geometric centers of the orthographic projections of every two adjacent mounting portions 13a3 in the second region hb is 80 mm-300 mm.

The distance L2 being in the range of 80 mm-300 mm can ensure a uniform connection between the battery 100 and the external apparatus, and also ensure the connection strength between the battery 100 and the external apparatus.

In some embodiments, referring to FIG. 13 and FIG. 14, a sealing region hc is further formed on the top surface h of the box 10, the sealing region hc is provided between the first region ha and the second region hb, and the sealing region hc surrounds the first region ha, the sealing region hc is configured for installing the sealing member 12, and the sealing member 12 is in contact with the external apparatus.

The sealing region hc is also a portion of the top surface h of the box 10, which is located between the first region ha and the second region hb to separate the first region ha and the second region hb to form a non-communicating relationship. The area of the sealing region hc should not be excessively large. Its main purpose is to install the sealing member 12 to achieve mutual isolation between the first region ha and the second region hb. The sealing region hc should match the size, volume, and shape of the sealing member 12 to ensure that the entire sealing member 12 can be assembled in the sealing region hc.

Understandably, the sealing member 12 has different states in the sealing region hc. When the sealing member 12 is in contact with the external apparatus and the box 10 is fixedly connected to the external apparatus, the sealing member 12 is in a compressed state and will undergo a certain deformation to ensure the sealing effect. When the battery 100 is separated from the external apparatus, the sealing member 12 returns to its original state.

In a specific embodiment, assuming that the external apparatus is the body 200 of the vehicle 1000, the battery 100 may be mounted on the bottom of the body 200, and sealedly connected to the body 200 through the sealing member 12 on a sealing region hc. In this case, the first region ha forms a closed space inside the body 200, and the external region hb is outside the body 200, and the fluids, solid particles, or the like outside the body 200 cannot leak to the inside of the body 200. For example, stones or liquids splashed during the operation of the vehicle 1000 cannot hit the inside of the body 200, thus achieving the sealing and structural reliability of the inside of the body 200.

Understandably, when the box 10 includes the sealing member 12, the sealing member 12 is installed in the sealing region hc to seal and separate the first region ha and the second region hb. The specific form of the sealing member 12 has been described in detail above and will not be repeated herein. The top surface h of the box 10 may include another region in addition to the first region ha, the sealing region hc, and the second region hb, and the another region may be provided inside the first region ha or outside the second region hb, which is not specifically limited in this application.

In some embodiments, referring to FIG. 13 and FIG. 14, a shortest distance L1 between a geometric center of an orthographic projection of the mounting portion 13a3 in the second region hb and an outer edge of the sealing region hc is 30 mm-200 mm.

The mounting portion 13a3 is projected onto the second region hb in a direction perpendicular to the second region hb. When the mounting portions 13a3 are connected to the external apparatus, each mounting portion 13a3 has a mounting force point, and the geometric center of the orthographic projection of each mounting portion 13a3 in the second region hb is the mounting force point of each mounting portion 13a3. The shortest distance L1 between the geometric center of the orthographic projection of the mounting portion 13a3 in the second region hb and the outer edge of the sealing region hc is the shortest distance between the mounting force point of each mounting portion 13a3 and the outer edge of the sealing region hc.

The outer edge of the sealing region hc is a boundary line shared by the sealing region hc and the second region hb. Naturally, the sealing region hc also has an inner edge, and the inner edge is a boundary line shared by the sealing region hc and the first region ha. In assembling the sealing member 12, the two side edges of the sealing member 12 overlap with the inner and outer side edges of the sealing region hc so that the sealing member 12 covers the entire sealing region hc.

The shortest distance L1 between the geometric center of the orthographic projection of the mounting portion 13a3 in the second region hb and the outer edge of the sealing region hc is a length of a perpendicular line drawn from the geometric center of each mounting portion 13a3 to the outer edge of the sealing region hc, ensuring that the distance between the sealing member 12 and the mounting portion 13a3 is within the specified range.

In a specific embodiment, assuming that the external apparatus is the body 200 of the vehicle 1000, controlling the shortest distance (that is, the distance L1) between the mounting force point of the mounting portion 13a3 and the outer edge of the sealing region hc to be 30 mm-200 mm can avoid the mounting force points of the mounting portions 13a3 from being too far away from the sealing member 12. This not only guarantees the sealing effect of the sealing member 12 on the inside of the body 200, but also reduces the mounting torque of each mounting portion 13a3 mounted on the body 200 and effectively shortens the arm of the mounting force to ensure the connection rigidity between the battery 100 and the body 200.

In some embodiments, referring to FIG. 13 and FIG. 14, a shortest distance L1 between a geometric center of an orthographic projection of the mounting portion 13a3 in the second region hb and an outer edge of the sealing region hc is 50 mm-100 mm.

Controlling the shortest distance within 50 mm-100 mm not only avoids the mounting force points of the mounting portions 13a3 from being too far away from the sealing member 12 so as to ensure the sealing and isolation effect of the sealing member 12 on the first region ha and the second region hb, but also guarantees the connection strength between the battery 100 and the external apparatus.

In some embodiments, the sealing region hc is coplanar with the second region hb.

Coplanar, also known as co-planar, means that the sealing region hc and the second region hb share a same plane in three-dimensional space. In this case, both the sealing region hc and the second region hb are constructed as flat planes, without any angle formed between them.

In a specific embodiment, when the external apparatus is the body 200 of the vehicle 1000 and the box 10 is assembled at the bottom of the body 200 via the top, the sealing region hc and the second region hb have the same height in the vertical direction. The sealing region hc is used for disposing the sealing member 12 for implementing a sealing function, and the second region hb is constructed with mounting portions for implementing a mounting function. In this case, the mounting force point of each mounting portion 13a3 and the sealing region hc are located in the same plane and at the same height. Through the mounting force points and the sealing member 12, only forces in the vertical direction are received, thus reducing the lateral structural force of the box 10 and the body 200, and improving the stiffness of the vehicle 1000.

In some embodiments, referring to FIG. 11, the first region ha, the second region hb, and the sealing region hc are coplanar.

In this case, the plane where the first region ha, the second region hb, and the sealing region hc are coplanar is in contact with the external apparatus, which results in a large contact area between the top surface h of the box 10 and the external apparatus, helping to improve the reliability of the connection between the box 10 and the external apparatus. Additionally, the top structure of the box 10 becomes more even, enhancing its aesthetic appeal.

When the external apparatus is the body 200 of the vehicle 1000, the internal region of the body 200 forming the top surface h of the box 10, the external region of the body 200, and the sealing region hc are all coplanar to ensure that both the internal region of the body 200 of the box 10 and the external region of the body 200 are subjected to only the forces in the vertical direction, thus further reducing the lateral structural force of the vehicle 1000.

In some embodiments, referring to FIG. 14, when the mounting portion 13a3 includes at least one mounting hole k1, all the mounting holes k1 run through the second region hb.

The description of the mounting hole k1 can be found above and will not be repeated herein. In a case that the mounting hole k1 runs through the second region hb, when connecting the box 10 to the external apparatus, a connecting member can be connected to the top of the box 10 from the second region hb peripheral to the top of the box 10, to increase the connection strength between the box 10 and the external apparatus.

In some embodiments, referring to FIG. 14, a reserved distance is present between an outer edge of the sealing region hc close to the second region hb and the circumferential sidewall n of the main body 11.

A description of the circumferential sidewall n holes of the main body 11 can be found above and will not be repeated herein. The outer edge of the sealing region hc close to the second region hb is not coplanar with the plane in which the circumferential sidewall n of the main body 11 is located in the vertical direction, allowing for a certain reserved distance between the outer edge of the sealing region hc and the outer edge of the top surface h1 of the main body 11.

When the sealing member 12 is being assembled and the sealing member 12 is not deformed, the two side edges of the sealing member 12 coincide with the inner and outer side edges of the sealing region hc. When the sealing member 12 is sealedly connected to the external apparatus, the sealing member 12 is deformed with both sides of the sealing member 12 extending beyond the sealing region hc, one side crossing over the sealing region hc to extend into the first region ha, and the other side crossing over the sealing region hc to extend into the second region hb.

Providing a reserved distance between the outer edge of the sealing region hc close to the second region hb and the circumferential sidewall of the main body 11 can reserve a sufficient space for deformation of the sealing member 12, preventing the deformed sealing member 12 from protruding beyond the top surface h1 of the main body 11 to other regions on the top of the box 10 and interfering with the structures on the other regions.

In some embodiments, referring to FIG. 11 and FIG. 13, the top surface h1 of the main body 11 forms at least a portion of the top surface h of the box 10.

The top surface h1 of the main body 11 is a side surface of the main body 11 that is located on the top of the main body 11 and faces away from the accommodating cavity s. When the box 10 includes both the main body 11 and the lateral beam 13 in the above embodiment, the top surface h of the box 10 may be defined jointly by the top surface h1 of the main body 11 and the top surface h2 of the lateral beam 13. The top surface h1 of the main body 11 and the top surface h2 of the lateral beam 13 may be coplanar. This allows for a larger contact area between the top surface h of the box 10 and the external apparatus, helping to improve the reliability of the connection between the box 10 and the external apparatus. Additionally, the top structure of the box 10 becomes more even, enhancing its aesthetic appeal. Certainly, the top surface h1 of the main body 11 and the top surface h2 of the lateral beam 13 may alternatively be not coplanar.

In other embodiments, the box 10 may also include structures other than the main body 11 and the lateral beam 13. In this case, the top surface h of the box 10 is jointly defined by the top surface h1 of the main body 11, the top surface h2 of the lateral beam 13, and the top surfaces of other structures.

Understandably, the first region ha and the sealing region hc are located on the top surface h1 of the main body 11, and the top surface h1 of the main body 11 may include other regions in addition to the first region ha and the sealing region hc, which is not specifically limited herein.

In some embodiments, referring to FIG. 11 and FIG. 13, at least a portion of the second region hb and the first region ha are located on the top surface h1 of the main body 11.

The top surface h1 of the main body 11 is divided into a first region ha, a sealing region hc surrounding outside the first region ha, and a second region hb surrounding outside the sealing region hc. When the sealing member 12 within the sealing region hc is compressed to deform, a side edge of the sealing member 12 extends towards the second region hb on the top surface h1 of the main body 11.

Understandably, the second region hb on the top surface h1 of the main body 11 is the reserved distance between the outer edge of the sealing region hc close to the second region hb and the circumferential sidewall n of the main body 11 can reserve a sufficient space for deformation of the sealing member 12, preventing the deformed sealing member 12 from protruding beyond the top surface h1 of the main body 11 to the lateral beam 13.

In some embodiments, the mounting portion 13a3 is located in the second region hb defined by the top surface h2 of the lateral beam 13.

For the mounting hole k1, reference may be made to the above description, and details are not repeated herein. The mounting hole k1 being provided in the second region hb defined by the top surface h2 also has the beneficial effect of the mounting portion 13a3 being provided on the top of the lateral beam 13. Details are not described herein.

When the box 10 includes both the main body 11 and the lateral beam 13 in the above embodiment, the top surface h of the box 10 may be defined jointly by the top surface h1 of the main body 11 and the top surface h2 of the lateral beam 13. Providing a reserved distance between the outer edge of the sealing region hc close to the second region hb and the circumferential sidewall of the main body 11 can reserve a sufficient space for deformation of the sealing member 12, preventing the deformed sealing member 12 from protruding beyond the top surface h1 of the main body 11 to the top surface h2 of the lateral beam 13 and interfering with the mounting of the mounting portions 13a3 on the lateral beam 13.

In some embodiments, referring to FIG. 14, the mounting portions 13a3 are provided on the first sub-beam 13a1 and/or the second sub-beam 13a2, and in the first direction F1 and/or the second direction F2, a distance L2 between geometric centers of orthographic projections of every two adjacent mounting portions 13a3 in the second region hb is 80 mm - 500 mm.

For the first sub-beam 13a1 and the second sub-beam 13a2, reference may be made to the above description, and details are not repeated herein. Two first sub-beams 13a1 extend in the first direction F1, two second sub-beams 13a2 extend in the second direction F2, and the mounting portions 13a3 are provided on the first sub-beams 13a1 and/or the second sub-beams 13a2, such that the mounting portions 13a3 extend in the first direction F1 and/or the second direction F2. This allows for uniform mounting and fixation with the external apparatus in multiple directions, further enhancing the connection between the external apparatus and the box 10.

Moreover, in a specified direction, a distance between the geometric centers of the orthographic projections of every two adjacent mounting portions 13a3 in the second region hb, as well as a distance between the geometric centers of the adjacent mounting holes k1, are limited to a specified range, to ensure that the arrangement distance between the mounting holes k1 is controllable along the extension direction of the first sub-beam 13a1 and along the extension direction of the second sub-beam 13a2, allowing for uniform distribution of forces on the body 200.

Understandably, when the box 10 includes the center channel beam 16, the center channel beam 16 is located in the first region ha such that the center channel beam 16 can be located in the middle region of the main body 11.

In a specific embodiment, the box 10 includes the main body 11 and the high-voltage compartment 15, the battery chamber s1 is formed inside the main body 11, the high-voltage compartment 15 is disposed on the top of the main body 11 and located in the first region ha, and the high-voltage compartment 15 encloses the high-voltage chamber s2 by itself or together with the main body 11. Since the first region ha forms a large portion of the top of the main body 11, arranging the high-voltage compartment 15 in the first region ha can improve the spatial utilization of the first region ha.

In another aspect, according to some embodiments of this application, referring to FIG. 3 and FIG. 4, this application provides a battery 100 including the box 10 in any of the above embodiments and a battery cell 20, the battery cell 20 being accommodated in the accommodating cavity s. Since the battery 100 includes the foregoing box 10, it has all the beneficial effects of the box 10. Details are not repeated herein.

In some embodiments, the battery 100 further includes a high-voltage box (not shown in the figure), and the box 10 is formed with a battery chamber s1 and a high-voltage chamber s2 independent of each other, where the battery chamber s1 is configured to accommodate the battery cell 20, and the high-voltage chamber s2 is configured to accommodate the high-voltage box.

The high-voltage box is an important safety barrier for a battery pack 100. It houses a high-voltage control system, and is mainly used for: connecting or disconnecting the high-voltage circuit according to the electronic control requirements of the vehicle; providing current and leakage detection terminals; implementing controllable on-load cut-off when the external current of the battery pack 100 is excessively large; disconnecting the high-voltage circuit when the external line of the battery pack 100 is short-circuited, to prevent the battery pack 100 from catching fire; and facilitating disconnection of the high-voltage circuit during maintenance of the battery pack 100.

In this case, currents from all battery cells 20 are connected and collected and safe electrical power is provided to the outside through the high-voltage box, enabling the battery 100 to provide power to external devices safely. Regarding the specific construction of the high-voltage box, reference can be made to the conventional configuration in the field, and this application does not involve specific improvements of the high-voltage box.

In some embodiments, referring to FIG. 10 and FIG. 20, the box 10 includes a main body 11, the main body 11 enclosing the accommodating cavity s, the main body 11 including a bearing member 11a disposed on the top of the box 10 and configured for defining the accommodating cavity s, and the battery cell 20 being provided on the bearing member 11a.

For the description of the main body 11, the top of the box 10, and the bearing member 11a, reference may be made to the description above, and details are not repeated herein. At this time, the bearing member 11a is a component capable of bearing the weight of the battery cell 20, which may be a bearing plate, a bearing block, a bearing sheet, a bearing frame, or the like, which is not specifically limited.

Specifically, the battery cell 20 may be disposed underneath the bearing member 11a, and shares with the bearing member 11a the forces on the top of the box 10 of the battery 100, thus increasing the stiffness of the top of the box 10 of the battery 100.

In some embodiments, referring to FIG. 10 and FIG. 20, the battery cell 20 is suspended from the bearing member 11a.

The battery cell 20 being suspended from the bearing member 11a means that the battery cell 20 is disposed below the bearing member 11a in the vertical direction, with the bearing member 11a bearing the weight of the battery cell 20. The ways in which the battery cell 20 is suspended from the bearing member 11a include: the battery cell 20 being directly bonded to the lower surface of the bearing member 11a, the battery cell 20 being connected to the bearing member 11a via a fastener and being located below the bearing member 11a, the battery cell 20 being mounted on the bearing member 11a by a hook or the like and being located below the bearing member 11a, and the like.

In this case, the battery cell 20 is suspended below the bearing member 11a, and the bottom cover 11c is located at the bottom of the box 10, so that during maintenance inside the battery 100, removing the bottom cover 11c can expose the battery cell 20 without having to removing the bearing member 11a, making the maintenance of the battery 100 more convenient. Moreover, during maintenance of the battery 100, the battery cell 20 can be unmounted from or mounted to the bearing member 11a from below. Especially when the bearing member 11a is stressed as at least a portion of the chassis of the vehicle 1000, the battery cell 20 can be unmounted from or mounted to the bearing member 11a from below without removing the bearing member 11a, thus facilitating the maintenance of the battery 100.

In some embodiments, the battery cell 20 is bonded to the bearing member 11a.

Specifically, the battery cell 20 and the bearing member 11a may be bonded with an adhesive such as an epoxy resin adhesive or an acrylate adhesive. This is not specifically limited. In this case, the battery cell 20 is bonded to the bearing member 11a, facilitating the connection and simplifying the structure of the battery 100.

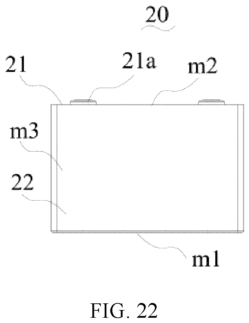

FIG. 22 is a schematic structural diagram of a battery cell 20 according to some embodiments of this application.

In some embodiments, referring to FIG. 22, an outer surface of the battery cell 20 facing the bearing member 11a is a first outer surface m1, the battery cell 20 includes electrode terminals 21a, and the electrode terminals 21a are arranged on an outer surface of the battery cell 20 other than the first outer surface m1.

As described above, the electrode terminal 21a is a component electrically connected to an electrode assembly 23 inside the battery cell 20 for outputting or inputting electric energy of the battery cell 20. The electrode terminal 21a extends at least partially beyond the battery cell 20 to be electrically connection to the outside. The series and parallel connections between the battery cells 20 are realized by the series and parallel connections between the respective electrode terminals 21a. The electrode terminal 21a is conductive to implement electrical transmission, and may be an aluminum electrode, a copper electrode, or the like.

The electrode terminals 21a are arranged on an outer surface of the battery cell 20 other than the first outer surface m1. The first outer surface m1 faces the bearing member 11a and is typically a smooth surface without any protruding or recessed structures such as the electrode terminals 21a or injection holes. When the battery cell 20 is suspended from the bearing member 11a, the first outer surface m1 is an outer surface of the battery cell 20 facing upward. Specifically, in an embodiment, the battery cell 20 includes the housing 22 and end cover 21 described above, and the housing 22 and the end cover 21 form an internal environment of the battery cell 20 for accommodating the electrode assembly 23. The end cover 21 is disposed at one end of the housing 22, and the electrode terminal 21a is arranged on the end cover 21. In this case, any outer surface of the housing 22 can be used as a first outer surface m1 of the battery cell 20.

The electrode terminals 21a include a positive electrode terminal and a negative electrode terminal, the positive electrode terminal is configured to be electrically connected to a positive electrode plate in the electrode assembly 23, and the negative electrode terminal is configured to be electrically connected to a negative electrode plate in the electrode assembly 23. It should be noted that the positive electrode terminal and the negative electrode terminal may be arranged on a same outer surface of the battery cell 20 (for example, a rectangular battery cell), or may be respectively arranged on two different outer surfaces of the battery cell 20 (for example, a cylindrical battery cell). When the positive electrode terminal and the negative electrode terminal are arranged on two different outer surfaces of the battery cell 20, the first outer surface m1 is a surface in the battery cell 20 that is different from the two outer surfaces.

In addition to the battery cells 20, the battery 100 is typically provided with components such as a sampling harness for electrically connecting the battery cells 20, a high-voltage harness, and a protective structure for protecting the battery cells 20. In this case, the electrode terminals 21a are arranged on a surface of the battery cells 20 other than the first outer surface m1, so that the components for the electrode terminals 21a such as the sampling harness, high-voltage harness, and protective structure are not limited by the bearing member 11a, and can be arranged in the space between the battery cell 20 and other structures of the main body 11 than the bearing member 11a (for example, in the space between the battery cell 20 and the bottom cover 11c and/or in the space between the battery cell 20 and the inner side surface of the main body 11), thus making component arrangement more convenient. Additionally, since the first outer surface m1 is a smooth surface, the first outer surface m1 can be fitted to the bearing member 11a, allowing for the seamless installation of the battery cell 20 onto the bearing member 11a without having to reserve a space between the battery cell 20 and the bearing member 11a, thus helping to improve the spatial utilization of the battery 100.

In some embodiments, referring to FIG. 22, the battery cell 20 has a second outer surface m2 disposed facing away from the first outer surface m1, the electrode terminals 21a being arranged on the second outer surface.

The second outer surface m2 is an outer surface of the battery cell 20 facing away from the first outer surface m1. When the battery cell 20 is suspended from the bearing member 11a, the second outer surface m2 is opposite the bottom cover 11c.

Further, the battery cell 20 and the bottom cover 11c may be spaced apart, to prevent external forces acting on the bottom cover 11c from being transmitted to the battery cell 20 and damaging the battery cell 20. In particular, when the battery 100 is installed at the bottom of the vehicle 1000 and the bottom cover 11c is at the lowest point of the battery 100, stones and the like on the ground are easily splashed to the bottom of the battery 100 and hit the bottom cover 11c during operation of the vehicle 1000. In this case, the buffer space can interrupt the transmission of external forces to the battery cell 20 from damaging the battery cell 20.

When the battery cell 20 and the bottom cover 11c are spaced apart, there is a buffer space between the second outer surface m2 and the bottom cover 11c, and a portion of the electrode terminal 21a that extends out of the battery cell 20 is located within the buffer space, so that the harness and connecting piece that are connected to the electrode terminal 21a can be arranged in the buffer space. In addition, as described above, the buffer space can also prevent the external force hitting the bottom cover 11c from acting on the battery cell 20 and damaging the battery cell 20. Therefore, the buffer space can not only interrupt the impact of external forces, but also allow for layout of the harness and the like, achieving two benefits at once. In addition, the spatial utilization of the buffer space and the battery 100 is improved.

In another aspect, this application further provides an electric apparatus. The electric apparatus includes the battery 100 according to any one of the foregoing embodiments, where the battery 100 is configured to supply electrical energy to the electric apparatus. For the electric apparatus, reference may be made to the above description, and details are not repeated herein.

Since the electric apparatus includes the foregoing battery 100, it has all the beneficial effects in the above embodiments. Details are not repeated herein.

FIG. 1 is a schematic diagram of a battery 100 applied to a body 200 according to some embodiments of this application.

In some embodiments, the electric apparatus includes a vehicle 1000, the battery 100 being provided at the bottom of the body 200 of the vehicle 1000. For the vehicle 1000, reference may be made to the above description, and details are not repeated herein.

The body 200 of the vehicle 1000 is the part of the vehicle 1000 used for carrying passengers and cargo, including the driver's cabin, passenger cabin, engine compartment, luggage compartment, and the like. The body 200 typically includes a shell and doors, windows, decorative elements, seats 300, air conditioning unit, and the like provided on the shell. The shell typically refers to a structure composed of the main load-bearing elements of the vehicle 1000 such as longitudinal beams, cross beams, chassis, pillars, as well as the sheet metal members connected to them. In the embodiments of this application, the battery 100 being provided at the bottom of the body 200 mainly means that the battery 100 is provided at the bottom of the shell.

In this case, providing the battery 100 at the bottom of the body 200 does not occupy the internal space of the body 200, which helps reduce the volume and weight of the body 200.

In some embodiments, the battery 100 is connected to the body 200 via the top of the box 10, and the top of the box 10 is configured to form at least a portion of a chassis of the body 200.

The chassis, as a part of the body 200, is a combination of the transmission system, running gear, steering system, and braking system. It is responsible for supporting and installing the engine of the vehicle 1000 and its components and assemblies, forming the overall structure of the vehicle 1000, transmitting engine power, and ensuring normal operation.

The chassis is located on the top of the box 10 of the body 200 and directly serves as at least a portion of the chassis. That is, the top of the box 10 is used to form at least a portion of the chassis of the body 200. In this way, the top of the box 10 is integrated with the chassis of the body 200, so that the space conventionally occupied by the gap between the chassis and the battery 100 is allocated to the battery 100 to increase the space of the battery 100. This helps improve the energy of the battery 100, thus enhancing the driving range of the vehicle 1000.

According to some embodiments of this application, the electric apparatus includes a vehicle 1000, the battery 100 being provided at the bottom of the body 200 of the vehicle 1000. The battery 100 includes a box 10 and a battery cell 20, the box 10 includes a bearing member 11a disposed on its top, the battery cell 20 is disposed within the box 10 and suspended from a bearing member 11a, and electrode terminals 21a of the battery cell 20 are disposed on an outer surface of the battery cell 20 facing away from the bearing member 11a, the bearing member 11a forming at least a portion of a chassis of the vehicle 1000. In this case, the battery 100 is suspended from the bearing member 11a, which can improve the strength of the bearing member 11a and in turn improve the strength of the top of the battery cell 20, so that the bearing member 11a as a chassis can meet a certain load requirement. In addition, the electrode terminal 21a of the battery cell 20 faces away from the bearing member 11a, which allows the battery cell 20 to be directly mounted on the bearing member 11a, eliminating the gap between the battery cell 20 and the bearing member 11a. The saved space can be utilized to increase the installation space for the battery cell 20, thus enhancing the energy of the battery 100 and improving the driving range of the vehicle 1000.

According to some embodiments of this application, referring to FIG. 1, FIG. 4, FIG. 13, and FIG. 14, the electric apparatus includes a vehicle, a battery being provided at the bottom of the body of the vehicle. The battery includes a box and a battery cell. The box includes a top surface facing away from an accommodating cavity. A first region, a second region, and a sealing region located between the first region and the second region are formed on the top surface, where the sealing region surrounds the first region, the sealing region is used for mounting a sealing member, the second region is constructed with multiple mounting portions, and the battery is mounted on an external apparatus through the mounting portions to make the sealing member in sealed contact with the external apparatus. In addition, a shortest distance between a geometric center of an orthographic projection of the mounting portion in the second region and an outer edge of the sealing region is 50 mm-100 mm. This can ensure the sealing and isolation effect of the sealing member on the first region and the second region, and guarantee the connection strength between the battery and the external apparatus.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application patent. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A box for battery, wherein the box has an accommodating cavity for accommodating a battery cell and a top surface facing away from the accommodating cavity; and a first region, a second region, and a sealing region located between the first region and the second region are formed on the top surface of the box, wherein the sealing region surrounds the first region, the sealing region is used for mounting a sealing member, the second region is constructed with multiple mounting portions, and the battery is mounted on an external apparatus through the mounting portions to make the sealing member in contact with the external apparatus;
wherein a shortest distance between a geometric center of an orthographic projection of the mounting portion in the second region and an outer edge of the sealing region is 30 mm-200 mm.

2. The box according to claim 1, wherein the shortest distance between the geometric center of the orthographic projection of the mounting portion in the second region and the outer edge of the sealing region is 50 mm-100 mm.

3. The box according to claim 1 or 2, wherein the sealing region is coplanar with the second region.

4. The box according to claim 1 or 2, wherein the first region, the second region, and the sealing region are coplanar.

5. The box according to any one of claims 1 to 4, wherein the mounting portion comprises at least one mounting hole, the mounting hole running through the second region.

6. The box according to any one of claims 1 to 5, wherein the box comprises the sealing member, the sealing member being mounted in the sealing region.

7. The box according to any one of claims 1 to 6, wherein the box comprises a main body, wherein the main body encloses the accommodating cavity, and a top surface of the main body defines at least a portion of the top surface of the box, the first region and the sealing region being located on the top surface of the main body.

8. The box according to claim 7, wherein the box further comprises a lateral beam, wherein the main body has a circumferential sidewall disposed around a top outer edge of the main body, the lateral beam is disposed on the circumferential sidewall, and the top surface of the main body and a top surface of the lateral beam jointly define the top surface of the box.

9. The box according to claim 8, wherein the mounting portions are located in the second region defined by the top surface of the lateral beam.

10. The box according to claim 8 or 9, wherein a reserved distance is present between an outer edge of the sealing region close to the second region and the circumferential sidewall of the main body.

11. The box according to any one of claims 7 to 10, wherein the main body comprises a bearing member and a frame, wherein the frame encloses a cavity with at least a top end being open, the bearing member covers the top end of the cavity, and the bearing member and the frame enclose at least a portion of the accommodating cavity; and
the lateral beam is disposed on the circumferential sidewall defined by the frame.

12. A battery, comprising:
the box according to any one of claims 1 to 11; and
a battery cell accommodated in the accommodating cavity.

13. The battery according to claim 12, wherein the box comprises a main body, wherein the main body encloses the accommodating cavity, and the main body comprises a bearing member located on the top of the box and configured for defining the accommodating cavity, the battery cell being provided on the bearing member.

14. The battery according to claim 13, wherein the battery cell is suspended from the bearing member.

15. The battery according to any one of claims 12 to 14, wherein an outer surface of the battery cell facing the bearing member is a first outer surface, the battery cell comprises electrode terminals, and the electrode terminals are arranged on an outer surface of the battery cell other than the first outer surface.

16. The battery according to claim 15, wherein the battery cell has a second outer surface disposed facing away from the first outer surface, and the electrode terminals are arranged on the second outer surface.

17. An electric apparatus, comprising a battery according to any one of claims 11 to 16, wherein the battery is configured to provide electrical energy to the electric apparatus.

18. The electric apparatus according to claim 17, wherein the electric apparatus comprises a vehicle, the battery being provided at the bottom of a body of the vehicle.

19. The electric apparatus according to claim 18, wherein the battery is connected to the body via the top of the box, and the top of the box is configured to form at least a portion of a chassis of the body.
